# EUROPEAN PATENT SPECIFICATION

(11) **EP 3 498 511 B1**
(45) Date of publication and mention of the grant of the patent: **13.01.2021**
(21) Application number: 18212905.6
(22) Date of filing: 17.12.2018
(51) Int. Cl.: B60K 1/04, B60K 1/00

(54) **METHOD FOR CONVERTING A VEHICLE WITH AN INTERNAL COMBUSTION ENGINE INTO AN ELECTRICAL VEHICLE**
VERFAHREN ZUM UMBAUEN EINES FAHRZEUGS MIT EINEM VERBRENNUNGSMOTOR IN EIN ELEKTRISCHES FAHRZEUG
PROCÉDÉ DE CONVERSION D'UN VÉHICULE A MOTEUR A COMBUSTION INTERNE EN VÉHICULE ÉLECTRIQUE

(30) Priority: 18.12.2017 IT 201700145951
(43) Date of publication of application: 19.06.2019
(73) Proprietor: Alma Mater Studiorum - Università di Bologna, 40126 Bologna (IT)
(72) Inventor: ROSSI, Claudio, 40121 Bologna (IT); BERTOLDI, Marco, 38013 Fondo (Trento) (IT); PONTARA, Davide, 45021 Badia Polesine (Rovigo) (IT); RAIMONDI, Luca, 40122 Bologna (IT); ZUCCHELLI, Andrea, 40014 Crevalcore (Bologna) (IT)
(74) Representative: Conti, Marco

(56) References cited:
- WO-A1-2010/071539
- WO-A1-2016/149836
- US-B1- 9 102 221

## Description

This invention relates to a method for converting a vehicle with an internal combustion engine into an electric vehicle, a conversion kit and an electric vehicle resulting from a conversion.

The scope of this invention is a retrofit, that is to say, conversion of a conventional vehicle, having an internal combustion engine, into an electric vehicle. The retrofit is an alternative to purchasing a new electric vehicle, with the aim of reusing conventional cars, and due to the need to bring down the costs of electric vehicles.

In retrofit solutions the need to have a suitable position for the electric batteries is paramount.

There are known patent documents relating to retrofit solutions, such as US08991535B, for a conversion system comprising two battery packs intended to be housed in the space under the bonnet, one battery pack intended to be housed in the boot in place of the spare wheel, one battery pack intended to be housed in place of the original lead-acid battery of the vehicle and two battery packs intended to be housed in the space originally occupied by the fuel tank.

Document US2013020139A describes a vehicle retrofit structure comprising a first plurality of modules prepared for being positioned in the space originally intended for the fuel tank, a second plurality of modules prepared for being positioned in a space between the front seats, and a third plurality of modules prepared for being positioned in the space originally intended for the spare wheel.

Other kits for converting vehicles with an internal combustion engine into electric vehicles are described in the following patent documents: WO2016/149836A1, WO2010/071539 and US9102221B1.

Therefore, recycling spaces created for other purposes is a known technique so that they can house the electric batteries. However, the prior art solutions have significant disadvantages. First, they only allow the housing of a limited number of batteries, with consequent limits in terms of autonomy. Moreover, such positions give rise to asymmetrical weight distribution in the vehicle, with consequent stability problems and vehicle crash behaviour.

The aim of this invention is to provide a method for converting a vehicle with an internal combustion engine into an electric vehicle, which overcomes the above-mentioned disadvantages of the prior art.

The aim of this invention is also to provide a conversion kit and an electric vehicle resulting from a conversion.

Said aims are fulfilled by the method, according to claim 1, for converting into an electric vehicle a vehicle with an internal combustion engine, by the conversion kit according to claim 9, and by the electric vehicle according to claim 13. The invention is defined by the features of the claims 1-8 for the method and features of the claims 9-15 for the conversion kit and the electric vehicle. Any further mentioned embodiments do not fall within the scope of the claims and have to be understood as exemplary embodiments.

In particular, initially the vehicle, also referred to as the original vehicle, conventional vehicle or donor vehicle, comprises an internal combustion engine. The conventional vehicle also comprises a clutch and a flywheel. The method allows the original vehicle, with internal combustion engine, to be converted into an electric vehicle. In other words, the method allows an electric vehicle resulting from a conversion to be obtained starting with a conventional vehicle.

The donor vehicle comprises a chassis. Since the chassis is kept during the conversion from a vehicle with internal combustion engine into an electric vehicle (although with changes described in detail below), the electric vehicle also comprises the chassis. In one embodiment, the chassis includes a platform. The term platform means the lower base of the chassis. In other words, the platform is the floor of the chassis. One platform model may be shared by different vehicle models.

The method disclosed comprises a step of preparing a conversion kit.

The conversion kit includes an electric motor. The conversion kit includes a battery pack. The battery pack includes one or more batteries. The conversion kit includes an inverter. The conversion kit includes a battery management system.

In one embodiment, the conversion kit includes two electric motors. Each motor is coupled to a mechanical speed reduction unit. Each motor has an output (constant-velocity joint) connectable to an axle shaft which drives the wheels. In one embodiment, the conversion kit includes two inverters, each supplying a respective electric motor.

In one embodiment, the method comprises a step of making an opening in the platform. In one embodiment, the opening is a slot. In one embodiment, the opening is a single slot. In one embodiment, the opening is a through hole. In one embodiment, the opening is made by cutting the platform. The cut defines an edge of the opening. In one embodiment, the opening is made by removing a portion of the platform which is inside the edge of the opening.

In one embodiment, the cut is made by the operator with a template. In one embodiment, the cut is made by the operator with a saw.

In one embodiment, the method comprises a step of coupling the conversion kit to the vehicle. During the coupling step, the battery pack is placed in the opening made in the platform.

Making the opening in the platform allows a purpose-made space to be created for inserting the battery pack. This space can be used to insert a battery pack whose size (and therefore capacity) is such that it guarantees the electric vehicle good autonomy. Moreover, the battery pack, positioned in the opening, allows reconstitution of the sturdiness and integrity mechanical characteristics of the platform (which could have been compromised by cutting and removing material). It should be noticed that the battery pack is placed in a single slot.

Therefore, following the conversion kit coupling step, the original vehicle is converted into an electric vehicle.

In one embodiment, the conversion kit includes a counterplatform. It should be noticed that, within the scope of this description, the term counterplatform means an element having a shape such that it can be juxtaposed with (or drawn near to or rested against) the platform. In one embodiment, the counterplatform is shaped like a cast of the platform, in such a way that it can be juxtaposed with the platform. Preferably, the counterplatform has (at least) one substantially planar portion. In one embodiment, the planar portion is configured to substitute a corresponding substantially planar portion of the platform (which has been removed in order to make the opening). In one embodiment, the planar portion is configured to be juxtaposed with a corresponding substantially planar portion of the platform (which surrounds the portion removed in order to make the opening). Preferably, a top face of the counterplatform is juxtaposed with an underside face of the platform.

In one embodiment, the method comprises a step of making the counterplatform. In one example embodiment, the counterplatform is made by moulding, using a mould which closely follows the shape of the platform. In one example embodiment the counterplatform is made with folded, welded, riveted and screwed sheet metal.

In one embodiment, during the coupling step, the counterplatform is juxtaposed with the platform.

In one embodiment, during the coupling step, the counterplatform is fixed to the chassis to support the battery pack. The counterplatform helps to restore the mechanical characteristics of the cut platform.

In one embodiment, the vehicle chassis includes a first longitudinal member. In one embodiment, the first longitudinal member runs parallel to a longitudinal direction, parallel to a direction of movement of the vehicle.

In one embodiment, the vehicle chassis includes a second longitudinal member. In one embodiment, the second longitudinal member runs parallel to the longitudinal direction. In one embodiment, the second longitudinal member is parallel to the first longitudinal member.

In one embodiment, the platform is supported by the first and second longitudinal members.

In one embodiment, said first and second longitudinal members constitute platform reinforcing elements. In one embodiment, said first and second longitudinal members are platform ribs.

In one embodiment, said first and second longitudinal members are positioned in a central zone of the platform, away from the vehicle doors. In another embodiment, said first and second longitudinal members are positioned at the outer margins of the platform, near the doors (in this embodiment the first and second longitudinal members may also be defined as a first and a second door sill).

In one embodiment, the opening is made in a central portion of the platform, between the first and second longitudinal members. In one embodiment, the opening runs lengthwise along the longitudinal direction. In one embodiment, the opening has one portion which runs lengthwise along the longitudinal direction and one portion which runs crosswise along a transversal direction, perpendicular to the longitudinal direction. In one embodiment, the opening is made in a central portion (in a central tunnel) of the vehicle. Positioning the battery pack in a central portion of the vehicle gives good symmetry to the weight distribution, which improves (compared with prior art solutions) the stability and safety of the vehicle.

In one embodiment, the coupling step comprises lifting the vehicle along a vertical direction. The vertical direction is parallel to the weight force. In one embodiment, the lifting is performed using a lifting platform. In one embodiment, the lifting is performed using an auto lift. In one embodiment, the coupling step comprises moving (in other words, lifting) the battery pack and the counterplatform (integral with it) along the vertical direction, to insert the battery pack into the opening. The battery pack and the counterplatform are lifted until the counterplatform is juxtaposed with the platform. This characteristic makes it extremely easy to insert the battery pack, requiring only a lifting platform (or similar equipment).

In one embodiment, the vehicle includes a pair of front wheels. In one embodiment, the vehicle includes a pair of rear wheels. In one embodiment, the vehicle includes a transmission shaft, connected to at least one pair of wheels of said pairs of front and rear wheels.

In one embodiment, the vehicle includes an original battery. The original battery may be, for example, a lead-acid battery.

In one embodiment, the vehicle includes an engine compartment. The engine compartment is disposed under a bonnet. In one embodiment, the vehicle includes an internal combustion engine, a gearbox, a clutch and a flywheel.

In one embodiment, said one or more batteries are rechargeable. In one embodiment, said one or more batteries are prismatic cells. In one embodiment, said one or more batteries are cylindrical cells. In one embodiment, said one or more batteries are pouch cells.

In one embodiment, the conversion kit includes a battery charger. The battery charger is configured to be connected to a power socket outside the vehicle for charging the batteries. In one embodiment, the conversion kit includes a plurality of power supplies for auxiliary units (for example power steering, servo brake, lights, fans).

In one embodiment, the conversion kit includes a driver interface. In one embodiment, the driver interface includes one or more of the following devices: a touchscreen interface, a stereo system, a radio receiver, an audio amplifier, a Bluetooth interface, a controller configured to control the conditioning system, a plurality of controls for example for window opening and closing or door locking, a plurality of emergency warning lights, a battery autonomy indicator, a battery charge indicator, an instantaneous consumption indicator.

In one embodiment, the conversion kit includes an electric motor. The electric motor is configured to be connected to the gearbox primary shaft, at the point where the clutch was connected in the original vehicle.

In another embodiment, the conversion kit includes two electric motors.

Each electric motor is coupled to a mechanical speed reduction unit. Each electric motor has an output (constant-velocity joint) connectable to an axle shaft which drives the wheels.

In one embodiment, the electric motor is an (asynchronous or synchronous) alternating current motor.

In one embodiment, the conversion kit includes an air conditioning system (hereinafter also referred to as a conditioning system). In one embodiment, the conditioning system comprises an evaporator. The vehicle comprises a driver and passenger compartment. The conditioning system is configured to condition and control the climate (by heating or cooling) of the air introduced into the vehicle driver and passenger compartment.

In one embodiment, the conversion kit includes a rear assembly. In one embodiment, the conversion kit includes a front assembly.

The front assembly contains the electric motor. In one embodiment, the front assembly contains the conditioning system (including the evaporator: the evaporator is connected to the driver and passenger compartment for sending conditioned air into it, but is disposed in the front assembly). There are prior art split conditioning systems and self-contained conditioning systems. The conditioning system according to this description is preferably of the self-contained type.

In particular, the evaporator is positioned inside an evaporation box (disposed in the front assembly), also containing a blower fan (or evaporator fan) and one or more heating elements. The evaporation box is connected to the driver and passenger compartment by an infeed duct, configured to convey the air arriving from the driver and passenger compartment into the evaporation box. In one embodiment, said infeed duct passes through a baffle plate. The evaporation box is connected to the outside environment by a further infeed duct, configured to convey the air from outside into the evaporation box. Said further duct can be opened and closed by means of an electrically operated gate valve.

In one embodiment, the conditioning system comprises a condenser (contained in the front assembly). The condenser comprises one or more fans. In one embodiment, the conditioning system comprises a drier (contained in the front assembly). In one embodiment, the conditioning system comprises a throttling valve (contained in the front assembly). In one embodiment, the conditioning system comprises a compressor (contained in the front assembly). In one embodiment, the compressor includes a dedicated electric motor, called the compressor electric motor. In one embodiment, the compressor includes a dedicated electric motor and an inverter (called the compressor drive).

The conditioning system evaporator is connected (by an outfeed duct) to an air distributor (comprising an expansion chamber and a plurality of outfeeds, which are connected to respective outlets, and selectable by means of an electrically operated distributor).

In one embodiment, the conditioning system is mechanically connected to the electric motor by means of an internal structure of the front assembly. In one embodiment, the front assembly, in which the electric motor and the conditioning system are disposed, is a self-contained conditioning system, that is to say, a single unit.

In one embodiment, the front assembly comprises an electrically operated actuator for changing gear. In one embodiment, the front assembly comprises a vacuum pump for the braking system.

In one embodiment, the rear assembly includes a concave casing, defining an inner housing of the rear assembly, and a cover, positioned on the casing to close it.

The rear assembly contains (in its inner housing) the battery pack. In one embodiment, the rear assembly contains the inverter (which may be fixed to the cover on the outside of the casing). In one embodiment, the rear assembly contains the battery charger (which may be fixed to the cover on the outside of the casing). In one embodiment, the rear assembly contains the plurality of power supplies for auxiliary units. In one embodiment, the rear assembly contains the battery management system (in particular, the battery management system may be positioned inside the casing, near the batteries).

In one embodiment, the rear assembly comprises one or more cooling chambers, in contact with the battery pack. The cooling chambers are shaped to guide a flow of cooling air through a ventilation duct and system, to pass over the batteries, so as to keep them cool below a threshold temperature (both during charging and as they discharge due to vehicle traction). The cooling air may be external air. The cooling air may be air cooled by the conditioning system (in this case, a portion of the flow of air coming out of the evaporator is diverted towards the cooling chambers, through a movable panel).

In one embodiment, the cooling chambers are in contact with the inverter. In one embodiment, the cooling chambers are shaped to guide the flow of cooling air so that it passes over the inverter, to limit inverter overheating.

In one embodiment, the cooling chambers are in contact with the battery charger. In one embodiment, the cooling chambers are shaped to guide the flow of cooling air so that it passes over the battery charger, to limit its overheating during charging.

In one embodiment, the conversion kit includes a cooling pipe, which connects the front assembly to the cooling chambers of the rear assembly. In another embodiment, the cooling pipe is configured to guide the flow of cooling air from the front assembly to the cooling chambers.

In one embodiment, the rear assembly comprises a plurality of openings (in the upper part of the rear assembly) configured to allow the cooling air to come out. In one embodiment, those openings put the cooling chambers in communication with a compartment intended to house the spare wheel (from which the cooling air can then come out through one or more passages already existing in the original vehicle).

In one embodiment, in which the conversion kit comprises two electric motors, the kit comprises a closed-circuit liquid cooling system (including a radiator and a cooling fan), inserted inside the front assembly.

In one embodiment, the rear assembly is a sealed rear assembly.

During the coupling step, the rear assembly is placed in the opening made in the platform. In other words, the rear assembly is placed in the single slot made in the platform.

In one embodiment, the method comprises a step of disconnecting the internal combustion engine from the transmission shaft. In one embodiment, the method comprises a step of removing the internal combustion engine from the engine compartment. In one embodiment, the method comprises a step of removing the clutch. In one embodiment, the method comprises a step of removing the flywheel. In one embodiment, the method comprises a step of disposing of the internal combustion engine, the clutch and the flywheel. In one embodiment, the method comprises a step of removing the original conditioning (or climate-control) system.

In one embodiment, the method comprises removing the original battery from the vehicle. In another embodiment, the method comprises keeping the original battery in the vehicle.

In one embodiment, during the coupling step the electric motor is placed in the engine compartment. In one embodiment, during the coupling step the electric motor is connected to the gearbox primary shaft, at the point where the clutch was located in the original vehicle, and to the chassis, preserving the suspension element (that is to say, the anchoring point) of the internal combustion engine of the original vehicle.

In one embodiment, during the coupling step the front assembly of the conversion kit (including the electric motor and the conditioning system) is placed in the engine compartment and coupled to the gearbox, (at the point where the clutch was located in the original vehicle), and to the chassis (in the suspension element of the internal combustion engine), by means of respective brackets for anchoring the front assembly.

In one embodiment, the platform has an underside face, facing downwards (that is to say, towards the ground). In one embodiment, the platform has a top face, opposite to the underside face.

In one embodiment, during the coupling step, the counterplatform is juxtaposed with the underside face of the platform.

In one embodiment, during the coupling step, the counterplatform is fixed (or rigidly coupled or anchored) to the chassis. In one embodiment, that coupling is performed by means of a system of screws and bushes. In one embodiment, that coupling is performed by means of rivets.

In one embodiment, the counterplatform is integral with the rear assembly. In one embodiment, the counterplatform has a top face, on which the rear assembly rests and is fixed. In one embodiment, the counterplatform has an underside face, opposite to the top face. In one embodiment, the top face of the counterplatform is juxtaposed with the underside face of the platform. Therefore, the counterplatform is fixed to the chassis to perform the function of supporting the battery pack, and to restore the mechanical characteristics of tensional and longitudinal rigidity, and to seal the driver and passenger compartment relative to the outside environment.

In one embodiment, the chassis includes a single longitudinal member, which runs lengthwise along the longitudinal direction. In this embodiment, the platform is supported by the single longitudinal member. In one embodiment, the opening is made alongside the single longitudinal member. In one embodiment, the method comprises a step of making an additional opening, on the opposite side of the single longitudinal member, relative to the opening. In this embodiment, the conversion kit comprises a battery pack, which will be placed in the opening, and an additional battery pack, which will be placed in the additional opening.

In one embodiment, the counterplatform includes a supporting portion. In one embodiment, the supporting portion defines a housing for the battery pack. In one embodiment, the supporting portion is integral with the battery pack. In one embodiment, the supporting portion is integral with the rear assembly. In one embodiment, the supporting portion is welded to the rear assembly. In one embodiment, the top face of the counterplatform (in the supporting portion) is in contact with the rear assembly. In one embodiment, the rear assembly rests on the top face of the counterplatform. In one embodiment, the rear assembly is welded to the top face of the counterplatform.

In one embodiment, the supporting portion constitutes the rear assembly. In this embodiment, the supporting portion has an inner compartment intended to house the battery pack.

In one embodiment, the supporting portion is a central portion of the counterplatform. When the battery pack, integral with the supporting portion of the counterplatform, is placed in the opening, the supporting portion of the counterplatform will be positioned at the opening.

In one embodiment, the counterplatform includes a fixing portion. In one embodiment, the fixing portion extends in a peripheral zone of the supporting portion. During the coupling step, the fixing portion is juxtaposed with the platform. In one embodiment, during the coupling step, the fixing portion is juxtaposed with the platform in a peripheral portion of the opening. During the coupling step, the top face of the fixing portion of the counterplatform is juxtaposed with the underside face of the platform.

In one embodiment, fixing the counterplatform to the chassis comprises anchoring the counterplatform to the first and second longitudinal members.

In one embodiment, the fixing portion of the counterplatform is fixed to the chassis. Since the longitudinal members constitute a load-bearing structure, fixing the counterplatform to the longitudinal members is particularly effective in restoring the mechanical characteristics of the cut platform. In one embodiment, the counterplatform is fixed to the first longitudinal member and to the second longitudinal member by means of a plurality of connectors. In one embodiment, said plurality of connectors includes a plurality of screws and a plurality of bushes. In fact, in one embodiment, a plurality of slots is made in the counterplatform, all of the slots being identical in shape and arrangement to a corresponding plurality of slots present in the first and second longitudinal members of the donor vehicle. Said screws and bushes are fixed to the plurality of slots of the counterplatform, and to the corresponding plurality of slots of the first and second longitudinal members.

In one embodiment, said plurality of connectors includes a plurality of rivets.

In one embodiment, the vehicle comprises a first rear suspension and a second rear suspension, which comprise respective first and second suspension arms. In one embodiment, the chassis comprises a first and a second suspension bearing, to which the first and second suspension arms are respectively fixed. Therefore, the first rear suspension and the second rear suspension are connected to the chassis of the vehicle at the first and at the second suspension bearing, respectively.

In one embodiment, the conversion kit comprises a first rear bracket and a second rear bracket. Each of said first and second rear brackets comprises a first portion and a second portion. Prior to the step of fixing the counterplatform to the chassis, the first portion of the first rear bracket is interposed between the chassis and the first suspension bearing (above the first suspension arm), and fixed to them; similarly, prior to the step of fixing the counterplatform to the chassis, the first portion of the second rear bracket is interposed between the chassis and the second suspension bearing (above the second suspension arm), and fixed to them. In other words, the first portion of the first rear bracket and the first portion of the second rear bracket are interposed and fixed between the chassis and the first and second suspension bearing, respectively. Moreover, the second portion of the first rear bracket and the second portion of the second rear bracket are fixed to the rear assembly. In one embodiment, the second portion of the first rear bracket and the second portion of the second rear bracket are fixed to the rear assembly after the rear assembly has been inserted into the opening. In another embodiment, the second portion of the first rear bracket and the second portion of the second rear bracket are fixed to the rear assembly during insertion of the rear assembly into the opening.

Preferably, the second portion of the first rear bracket and the second portion of the second rear bracket are fixed to the counterplatform. Therefore, in one embodiment, fixing the counterplatform to the chassis comprises fixing the first portion of the first rear bracket to the second portion of the first rear bracket, and fixing the first portion of the second rear bracket to the second portion of the second rear bracket.

In one embodiment, the first portion of the first rear bracket and the first portion of the second rear bracket project from the side of the battery pack, one symmetrical to the other along a longitudinal axis of the vehicle, running lengthwise along the longitudinal direction.

In one embodiment, fixing the counterplatform to the chassis comprises anchoring the counterplatform to the first and second suspension bearings.

In one embodiment, the vehicle comprises a first and a second rear suspension connection. In one embodiment, fixing the counterplatform to the chassis comprises anchoring the counterplatform to the first and second rear suspension connections.

In one embodiment, the vehicle comprises one or more seats connected to the platform with a plurality of connectors at respective seat connecting points. In one embodiment, prior to the step of making an opening in the platform, the method comprises a step of removing one or more of said connectors from the respective seat connecting points. In one embodiment, rigidly coupling the counterplatform to the chassis comprises connecting the counterplatform to the seats at the one or more seat connecting points from which said one or more connectors have been previously removed.

In one embodiment, the conversion kit comprises two seat-holder structures (for example comprising a metal frame). In one embodiment, each seat-holder structure comprises at least one seat belt fastening point. In another embodiment, at least one seat is connected the seat-holder structure and comprises at least one seat belt fastening point.

In another embodiments, the step of coupling the conversion kit comprises placing the front assembly in the engine compartment (from which the internal combustion engine has been removed). In one embodiment, in addition to the electric motor, the front assembly contains the conditioning system, including the evaporator. This aspect is distinctive compared with the prior art, that is to say, positioning the evaporator in the driver and passenger compartment, and has the advantage of facilitating kit installation, since the operator who carries out the retrofit does not have to directly handle hazardous substances, such as the conditioning circuit coolant (which remains contained inside the front assembly).

In one embodiment, the front assembly is fixed to the vehicle at a first connecting point (above the wheelhouse, using an internal combustion engine suspension system, existing in the original vehicle) and a second connecting point (on the gear housing).

In one embodiment, the method comprises a step of connecting the rear assembly to the front assembly. The rear assembly is connected to the front assembly by means of single-core power cables and multi-core signal and control cables.

This description also relates to a conversion kit for converting into an electric vehicle a vehicle with an internal combustion engine.

The vehicle with an internal combustion engine comprises a chassis. The chassis includes a platform. The platform has an underside face, facing downwards (that is to say, towards the ground) and a top face, opposite to the underside face.

The conversion kit includes an electric motor. The conversion kit includes a battery pack. The battery pack includes one or more batteries. In one embodiment, said one or more batteries are prismatic cells. In one embodiment, said one or more batteries are cylindrical cells. In one embodiment, said one or more batteries are pouch cells.

The conversion kit includes an inverter. The conversion kit includes a battery management system.

In one embodiment, the conversion kit includes a battery charger. In one embodiment, the conversion kit includes a plurality of power supplies for auxiliary units.

In one embodiment, the conversion kit includes a driver interface. In one embodiment, the driver interface includes one or more of the following devices: a touchscreen interface, a stereo system, a radio receiver, an audio amplifier, a Bluetooth interface, a controller configured to control the conditioning system, a plurality of controls for example for window opening and closing or door locking, a plurality of emergency warning lights, a battery autonomy indicator, a battery charge indicator, an instantaneous consumption indicator.

In one embodiment, the conversion kit includes an electric motor.

In one embodiment, the conversion kit includes two electric motors, where each electric motor is coupled to a mechanical speed reduction unit, and each electric motor has an output (constant-velocity joint) connectable to an axle shaft which drives the wheels. In one embodiment, the conversion kit includes two inverters, each supplying a respective electric motor.

In one embodiment, the conversion kit includes a conditioning system. The conditioning system according to this description is preferably of the self-contained type. In one embodiment, the conditioning system comprises an evaporator. In one embodiment, the conditioning system is connected to the electric motor.

In one embodiment, the conversion kit includes a rear assembly. In one embodiment, the rear assembly comprises a casing, including a bottom wall and a lateral wall. In one embodiment, the rear assembly comprises a cover, fixed to the lateral wall of the casing to close it.

In one embodiment, the conversion kit includes a front assembly.

In one embodiment, the conversion kit comprises a conditioning (or climate control) system. The conditioning system according to this description is preferably of the self-contained type.

In one embodiment, the conditioning system includes an evaporator. The evaporator is positioned inside an evaporation box (disposed in the front assembly), also containing a blower fan and one or more heating elements. The evaporation box is connectable to the driver and passenger compartment by an infeed duct, configured to convey the air arriving from the driver and passenger compartment into the evaporation box. The evaporation box is connectable to the outside environment by a further infeed duct, configured to convey the air from outside into the evaporation box. Said further duct can be opened and closed by means of an electrically operated gate valve.

In one embodiment, the conditioning system includes a condenser. The condenser comprises one or more fans. In one embodiment, the conditioning system includes a drier. In one embodiment, the conditioning system includes a throttling valve. In one embodiment, the conditioning system includes a compressor. In one embodiment, the compressor includes a dedicated electric motor, called the compressor electric motor. In one embodiment, the conditioning system includes a compressor inverter, for supplying the compressor electric motor.

In one embodiment, the front assembly contains the electric motor. In one embodiment, the front assembly contains the conditioning system. In one embodiment, the front assembly also contains the evaporator. In one embodiment, the conditioning system is mechanically connected to the electric motor by means of an internal structure of the front assembly.

In one embodiment, the front assembly comprises an electrically operated actuator for changing gear. In one embodiment, the front assembly comprises a vacuum pump for the braking system.

The rear assembly contains the battery pack. In one embodiment, the rear assembly contains the inverter. In one embodiment, the rear assembly contains the battery charger. In one embodiment, the rear assembly contains the plurality of power supplies for auxiliary units. In one embodiment, the rear assembly contains the battery management system. In one embodiment, the rear assembly comprises one or more cooling chambers, in contact with the battery pack. The cooling chambers are shaped to guide a flow of cooling air from a cooling compressor (through a ventilation duct and system) to the batteries, so as to keep them cool below a threshold temperature. The cooling air may be external air. The cooling air may be air cooled by the conditioning system (in this case, a portion of the flow of air coming out of the evaporator is diverted towards the cooling chambers, through a movable panel).

In one embodiment, the rear assembly is a sealed rear assembly.

In one embodiment, the conversion kit comprises a counterplatform. In one embodiment, the counterplatform is configured to be juxtaposed with and fixed to the chassis. In one embodiment, the shape of the counterplatform closely follows the shape of the platform, in such a way that it can be juxtaposed with the platform. In one embodiment, the counterplatform is configured to be fixed to the chassis.

The counterplatform has an underside face and a top face, opposite to the underside face. In one embodiment, the shape of the top face of the counterplatform (at least partly) closely follows that of the underside face of the platform.

According to the invention the counterplatform includes a baseplate and the baseplate has an underside face and a top face, opposite to the underside face. In one embodiment, the top face of the baseplate defines the top face of the counterplatform. In one embodiment, the underside face of the baseplate defines the underside face of the counterplatform. According to the invention the top face of the baseplate is configured to be juxtaposed with the platform of the vehicle. In one embodiment, the top face of the baseplate is configured to be juxtaposed with the underside face of the platform the vehicle.

In one embodiment, the counterplatform comprises a plurality of crosspieces. The plurality of crosspieces is fixed to the underside face of the baseplate. In one embodiment, the plurality of crosspieces is welded to the underside face of the baseplate. In one embodiment, the plurality of crosspieces is fixed to the underside face of the baseplate by means of a system of rivets. In one embodiment, the plurality of crosspieces is fixed to the underside face of the baseplate by welding. In one embodiment, the plurality of crosspieces is fixed to the underside face of the baseplate by means of a system of screws. In one embodiment, the plurality of crosspieces is fixed to the underside face of the baseplate by gluing. In one embodiment, the plurality of crosspieces is fixed to the underside face of the baseplate by means of a combination of fixing systems with rivets and screws.

In one embodiment, the plurality of crosspieces is fixed to the underside face of the baseplate by means of a system of joints between complementary parts. The function of the crosspieces is to give the counterplatform greater mechanical strength than it would have with the baseplate alone.

In one embodiment, the counterplatform comprises a plurality of spacers (or shims). In one embodiment, the plurality of spacers is fixed to the top face of the baseplate. In one embodiment, the plurality of spacers is welded to the top face of the baseplate. In one embodiment, the plurality of spacers is fixed to the top face of the baseplate by means of a system of rivets. In one embodiment, the plurality of spacers is fixed to the top face of the baseplate by means of a system of screws. In one embodiment, the plurality of spacers is fixed to the top face of the baseplate by welding. In one embodiment, the plurality of spacers is fixed to the top face of the baseplate by gluing. In one embodiment, the plurality of spacers is fixed to the top face of the baseplate by means of a combination of fixing systems with rivets, welding and gluing. In one embodiment, the plurality of spacers is fixed to the top face of the baseplate by means of a system of joints between complementary parts. In one embodiment, the plurality of spacers rests on top of the baseplate.

The aim of the plurality of spacers is to give the counterplatform greater mechanical strength than it would have with the baseplate alone.

In one embodiment, the battery pack rests on said plurality of spacers. In one embodiment, the rear assembly is fixed on said plurality of spacers. In one embodiment, said plurality of spacers is interposed between the baseplate and the rear assembly. In one embodiment, said plurality of spacers is interposed between the baseplate and the battery pack.

The function of the plurality of spacers is to keep the bottom of the rear assembly (the bottom of the casing) distanced from the baseplate, so as to guarantee a counterplatform deformability zone in the event of impact with the ground, to protect the batteries from the impact.

In one embodiment, the baseplate includes a plurality of low carbon steel sheets. In one embodiment, the carbon steel of the baseplate is S235JZN steel. In one embodiment, the carbon steel of the baseplate is hot-galvanized.

In one embodiment, the baseplate is made of a light metal alloy. In one embodiment, the baseplate is made of a composite material. In one embodiment, the baseplate is made of reinforced plastic.

In one embodiment, each spacer of said plurality of spacers includes a plurality of low carbon steel sheets. In one embodiment, the carbon steel of the plurality of spacers is S235JZN steel. In one embodiment, the carbon steel of the plurality of spacers is hot-galvanized.

In one embodiment, the plurality of spacers is made of a light metal alloy. In one embodiment, the plurality of spacers is made of a composite material. In one embodiment, the plurality of spacers is made of reinforced plastic.

In one embodiment, each crosspiece of said plurality of crosspieces includes a plurality of low carbon steel sheets. In one embodiment, the carbon steel of the plurality of crosspieces is S235JZN steel. In one embodiment, the carbon steel of the plurality of crosspieces is hot-galvanized.

In one embodiment, the plurality of crosspieces is made of a light metal alloy. In one embodiment, the plurality of crosspieces is made of a composite material. In one embodiment, the plurality of crosspieces is made of reinforced plastic.

In one embodiment, the counterplatform includes the baseplate, the plurality of spacers and the plurality of crosspieces.

In one embodiment, the counterplatform includes a plurality of low carbon steel sheets. In one embodiment, the carbon steel is hot-galvanized. In one embodiment, the carbon steel is S235JZN steel. In one embodiment, said sheets are 2 mm thick. In one embodiment, said sheets are 3 mm thick. In one embodiment, said sheets are 1 mm thick. In one embodiment, said sheets are between 1 mm and 3 mm thick.

In one embodiment, the sheets have bent stretches with a bend radius of less than 3 mm. In one embodiment, the sheets have bent stretches with a bend radius of less than 5 mm.

Moreover, in one embodiment, the conversion kit includes a first and a second rear bracket. In one embodiment, each of said first and second rear brackets comprises a first portion and a second portion. The first portion of the first rear bracket is configured to be interposed between the chassis and the first suspension bearing (above the first suspension arm), and fixed to them (for example, by means of screws); similarly, the first portion of the second rear bracket is configured to be interposed between the chassis and the second suspension bearing (above the second suspension arm), and fixed to them (for example, by means of screws). In other words, the first portion of the first rear bracket and the first portion of the second rear bracket are configured to be interposed and fixed between the chassis and the first and second suspension bearing, respectively. Moreover, the second portion of the first rear bracket and the second portion of the second rear bracket are fixed to the rear assembly. Preferably, the second portion of the first rear bracket and the second portion of the second rear bracket are fixed to the counterplatform. In one embodiment, the first portion of the first rear bracket is configured to be fixed (for example, by means of screws) to the second portion of the first rear bracket, and the first portion of the second rear bracket is configured to be fixed (for example, by means of screws) to the second portion of the second rear bracket.

This description also provides an electric vehicle converted from an original vehicle with an internal combustion engine.

The electric vehicle comprises a chassis. The chassis comprises a platform.

The term platform means the lower base of the chassis. In other words, the platform is the floor of the chassis. One platform model may be shared by different vehicle models.

In one embodiment, the vehicle includes a pair of front wheels. In one embodiment, the vehicle includes a pair of rear wheels. In one embodiment, the vehicle includes a transmission shaft, connected to at least one pair of wheels of said pairs of front and rear wheels.

In one embodiment, the vehicle includes a conversion kit.

In one embodiment, the conversion kit comprises an electric motor. In one embodiment, the electric motor is an (asynchronous or synchronous) alternating current induction motor.

In one embodiment, the conversion kit includes two electric motors, each coupled to a mechanical speed reduction unit and having an output (constant-velocity joint) connected to an axle shaft which drives the wheels.

In one embodiment, the vehicle includes an engine compartment. The engine compartment is positioned in a front zone of the vehicle, traditionally used to house an internal combustion engine.

In one embodiment, the conversion kit includes a counterplatform.

In one embodiment, the counterplatform is juxtaposed with the platform. In one embodiment, the counterplatform is shaped like a cast of the platform. In one embodiment, the platform has an underside face, facing downwards (that is to say, towards the ground). In one embodiment, the platform has a top face, opposite to the underside face.

In one embodiment, the counterplatform is juxtaposed with the underside face of the platform.

In one embodiment, the counterplatform is fixed to the chassis. In one embodiment, the counterplatform is rigidly coupled (or anchored) to the chassis. In one embodiment, the counterplatform is fixed to the chassis by means of a system of screws and bushes. In one embodiment, the counterplatform is fixed to the chassis by means of rivets.

In one embodiment, the conversion kit includes a rear assembly. In one embodiment, the rear assembly comprises a casing, including a bottom wall and a lateral wall. In one embodiment, the rear assembly comprises a cover, fixed to the lateral wall of the casing to close it.

In one embodiment, the conversion kit includes a front assembly.

The front assembly contains the electric motor (or the two electric motors). In one embodiment, the front assembly is positioned in the engine compartment. In one embodiment, the front assembly is fixed to the vehicle at a first connecting point (above the wheelhouse, using an internal combustion engine suspension system, existing in the original vehicle) and a second connecting point (on the gear housing), by means of respective front assembly anchoring brackets.

In one embodiment, the conversion kit comprises a conditioning (or climate control) system. In one embodiment, the conditioning system comprises a condenser. In one embodiment, the conditioning system comprises an evaporator. In one embodiment, the conditioning system comprises an expansion valve. In one embodiment, the conditioning system comprises a compressor. In one embodiment, the conditioning system comprises a drier. In one embodiment, the conditioning system comprises a first fan (evaporator blowing fan) and a second fan (condenser cooling fan).

In one embodiment, the front assembly contains the conditioning (or climate control) system. In one embodiment, the conditioning (or climate control) system is disposed in the front assembly. In one embodiment, the conditioning system comprises a condenser (contained in the front assembly). The condenser comprises one or more fans. In one embodiment, the conditioning system comprises a drier (contained in the front assembly). In one embodiment, the conditioning system comprises a throttling valve (contained in the front assembly). In one embodiment, the conditioning system comprises a compressor (contained in the front assembly). In one embodiment, the compressor includes a dedicated electric motor, called the compressor electric motor. In one embodiment, the compressor includes a dedicated electric motor and an inverter (called the compressor drive).

In one embodiment, the front assembly comprises an electrically operated actuator for changing gear. In one embodiment, the front assembly comprises a vacuum pump for the braking system.

In one embodiment, the conversion kit includes a battery pack. The battery pack includes one or more batteries. Said one or more batteries are rechargeable. In one embodiment, said one or more batteries are prismatic cells. In one embodiment, said one or more batteries are cylindrical cells. In one embodiment, said one or more batteries are pouch cells.

In one embodiment, the conversion kit includes an inverter.

In one embodiment, the conversion kit includes a battery management system.

In one embodiment, the conversion kit includes a battery charger. The battery charger is configured to be connected to a power socket for charging the batteries.

In one embodiment, the conversion kit includes a plurality of power supplies for auxiliary units (for example power steering, servo brake, lights, fans).

In one embodiment, the conversion kit includes a driver interface. In one embodiment, the driver interface includes one or more of the following devices: a touchscreen interface, a stereo system, a radio receiver, an audio amplifier, a Bluetooth interface, a controller configured to control the conditioning system, a plurality of controls for example for window opening and closing or door locking, a plurality of emergency warning lights, a battery autonomy indicator, a battery charge indicator, an instantaneous consumption indicator.

The rear assembly contains the battery pack. In one embodiment, the rear assembly contains the inverter. In one embodiment, the rear assembly contains the battery charger. In one embodiment, the rear assembly contains the plurality of power supplies for auxiliary units. In one embodiment, the rear assembly contains the battery management system.

In one embodiment, the rear assembly comprises one or more cooling chambers, in contact with the battery pack. The cooling chambers are shaped to guide a flow of cooling air from a cooling compressor to the batteries, so as to keep them cool below a threshold temperature. The cooling air may be external air. The cooling air may be air cooled by the conditioning system (in this case, a portion of the flow of air coming out of the evaporator is diverted towards the cooling chambers, through a movable panel).

In one embodiment, the rear assembly is a sealed rear assembly.

In one embodiment, the counterplatform is integral with the rear assembly. In one embodiment, the counterplatform is fixed to the rear assembly. In one embodiment, the rear assembly is supported by the counterplatform. In one embodiment, the battery pack is supported by the counterplatform.

In one embodiment, the counterplatform has a top face, on which the rear assembly rests and is fixed. In one embodiment, the counterplatform has an underside face, opposite to the top face. In one embodiment, the top face of the counterplatform is juxtaposed with the underside face of the platform. Therefore, the counterplatform is fixed to the chassis to perform the function of supporting the battery pack.

In one embodiment, the vehicle chassis includes a first longitudinal member. The first longitudinal member runs lengthwise along a longitudinal direction, parallel to a direction of movement of the vehicle. In one embodiment, the vehicle chassis includes a second longitudinal member. The second longitudinal member runs lengthwise along the longitudinal direction. In one embodiment, the platform is supported by the first and second longitudinal members.

In one embodiment, said first and second longitudinal members constitute platform reinforcing elements. In one embodiment, said first and second longitudinal members are platform ribs.

In one embodiment, said first and second longitudinal members are positioned in a central zone of the platform, away from the vehicle doors. In another embodiment, said first and second longitudinal members are positioned at the outer margins of the platform, near the doors (in this embodiment the first and second longitudinal members may also be defined as a first and a second door sill).

In one embodiment, there is an opening in the platform. In one embodiment, the opening is a slot (that is to say, a single slot). In one embodiment, the opening is a through hole.

In one embodiment, the opening is made in a central portion of the platform, between the first and second longitudinal members. In one embodiment, the opening runs lengthwise along the longitudinal direction. In one embodiment, the opening has one portion which runs lengthwise along the longitudinal direction and one portion which runs crosswise along a transversal direction, perpendicular to the longitudinal direction. In one embodiment, the opening is T-shaped. In one embodiment, the opening is disposed in a central tunnel of the vehicle. The battery rear assembly is disposed inside the opening. The battery pack is disposed inside the opening.

In another embodiment, the chassis includes a single longitudinal member, running lengthwise along the longitudinal direction. In this embodiment, the platform is supported by the single longitudinal member. In one embodiment, the opening is made alongside the single longitudinal member. In one embodiment, an additional opening is made in the platform, on the opposite side of the single longitudinal member, relative to the opening. In this embodiment, the electric vehicle comprises a battery pack, disposed in the opening, and an additional battery pack, disposed in the additional opening.

In one embodiment, the counterplatform includes a supporting portion. In one embodiment, the supporting portion is a central portion of the counterplatform. In one embodiment, the supporting portion of the counterplatform defines a housing for the battery pack. In one embodiment, the supporting portion is disposed below the opening in the platform, to close it. In one embodiment, the supporting portion of the counterplatform is disposed at the opening in the platform. In one embodiment, the supporting portion of the counterplatform covers (from below) the opening in the platform.

In one embodiment, the supporting portion is fixed to the battery pack. In one embodiment, the supporting portion is fixed to the rear assembly. In one embodiment, the supporting portion is welded to the rear assembly. In one embodiment, the supporting portion is connected to the rear assembly by means of a system of screws and bushes. In one embodiment, the top face of the counterplatform (in the supporting portion) is in contact with the rear assembly. In one embodiment, the rear assembly rests on the top face of the counterplatform. In one embodiment, the rear assembly is welded to the top face of the counterplatform.

In one embodiment, the supporting portion itself constitutes the rear assembly. In this embodiment, the supporting portion has an inner compartment intended to house the battery pack.

In one embodiment, the counterplatform includes a fixing portion. In one embodiment, the fixing portion extends in a peripheral zone of the supporting portion. The fixing portion is configured to be fixed to the platform. In one embodiment, the fixing portion is juxtaposed with the platform in a peripheral portion of the opening. The top face of the counterplatform in the fixing portion is juxtaposed with the underside face of the platform.

In one embodiment, the counterplatform is configured to be fixed to the first and second longitudinal members of the chassis. In one embodiment, the counterplatform is fixed to the first longitudinal member and to the second longitudinal member by means of a plurality of connectors. In one embodiment, said plurality of connectors includes a plurality of screws and a plurality of bushes. In fact, in one embodiment, a plurality of slots is defined in the counterplatform, all of the slots being identical in shape and arrangement to a similar plurality of slots present in the first and second longitudinal members. Said screws and bushes are fixed to the plurality of slots of the counterplatform, and to the similar plurality of slots of the first and second longitudinal members.

In one embodiment, said plurality of connectors includes a plurality of rivets. Said rivets are driven into the counterplatform (in the supporting portion) and into the first and the second longitudinal members.

In one embodiment, the vehicle comprises a first rear suspension and a second rear suspension. In one embodiment, the chassis comprises a first and a second suspension bearing. The first rear suspension and the second rear suspension are connected to the chassis of the vehicle at the first and at the second suspension bearing, respectively. In one embodiment, the counterplatform at the chassis is fixed to the first and second suspension bearings.

In particular, the conversion kit includes a first and a second rear bracket. In one embodiment, each of said first and second rear brackets comprises a first portion and a second portion. The first portion of the first rear bracket is interposed between the chassis and the first suspension bearing (above the first suspension arm), and fixed to them (for example, by means of screws); similarly, the first portion of the second rear bracket is interposed between the chassis and the second suspension bearing (above the second suspension arm), and fixed to them (for example, by means of screws). In other words, the first portion of the first rear bracket and the first portion of the second rear bracket are interposed and fixed between the chassis and the first and second suspension bearing, respectively. Moreover, the second portion of the first rear bracket and the second portion of the second rear bracket are fixed to the rear assembly. Preferably, the second portion of the first rear bracket and the second portion of the second rear bracket are fixed to the counterplatform. In one embodiment, the first portion of the first rear bracket is fixed (for example, by means of screws) to the second portion of the first rear bracket, and the first portion of the second rear bracket is fixed (for example, by means of screws) to the second portion of the second rear bracket.

In one embodiment, the vehicle comprises a rear rigid axle. In one embodiment, the chassis comprises a first and a second rear rigid axle connection. In one embodiment, said first and second rear rigid axle connection coincide with said first and second suspension bearing, respectively. In one embodiment, the rear rigid axle is connected to the suspensions at the first and second rear rigid axle connections. In one embodiment, the counterplatform is fixed to the chassis at the first and at the second rear rigid axle connections.

In one embodiment, the original vehicle comprises one or more seats connected to the platform with a plurality of connectors at respective seat connecting points. In one embodiment, in the electric vehicle resulting from a conversion, the counterplatform is fixed to the seats at the one or more seat connecting points (originally intended for connecting the seats to the platform).

This and other features are more apparent in the following description of a preferred embodiment, provided by way of example only and without limiting the scope of the invention, with reference to the accompanying drawings, in which:

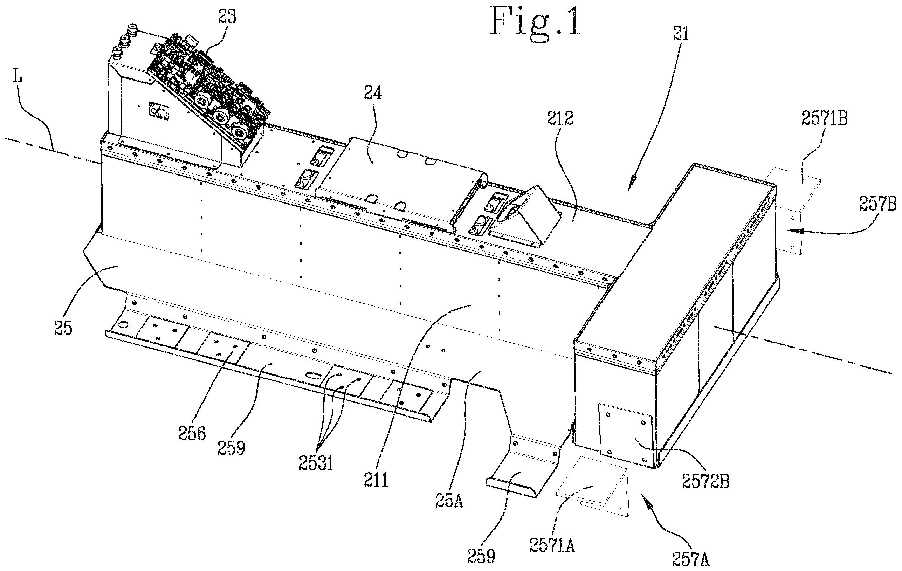

- Figure 1 illustrates a rear assembly and a counterplatform of the conversion kit according to this description;

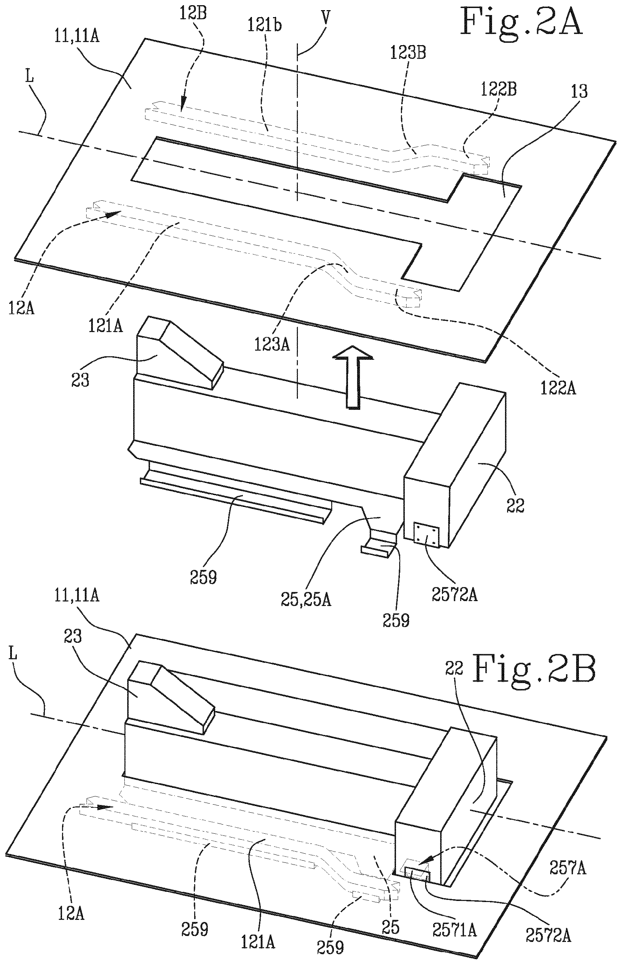

- Figures 2A and 2B schematically illustrate two successive steps of the method in one embodiment according to this description;

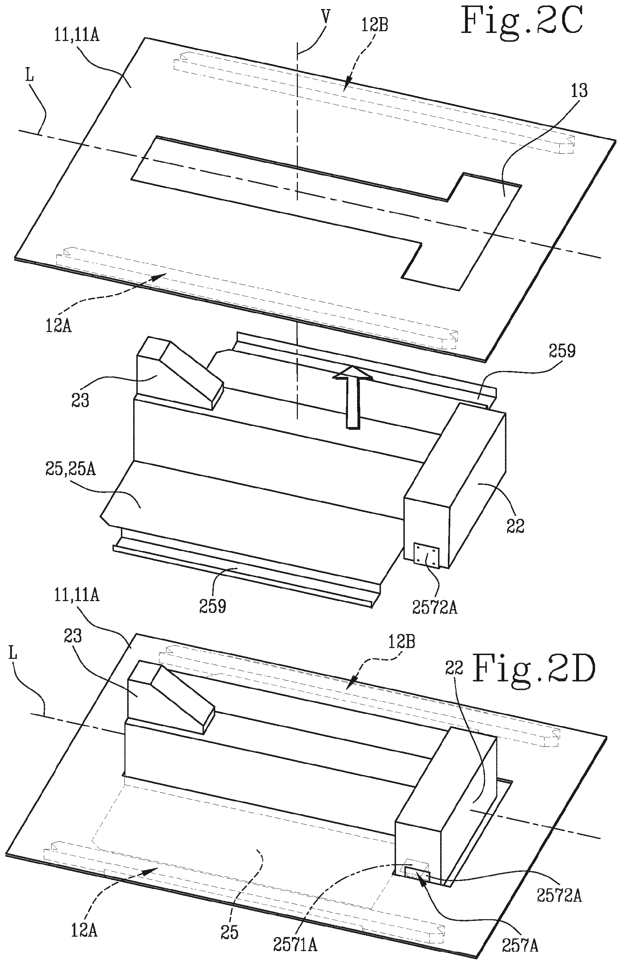

- Figures 2C and 2D schematically illustrate two successive steps of the method in one embodiment according to this description;

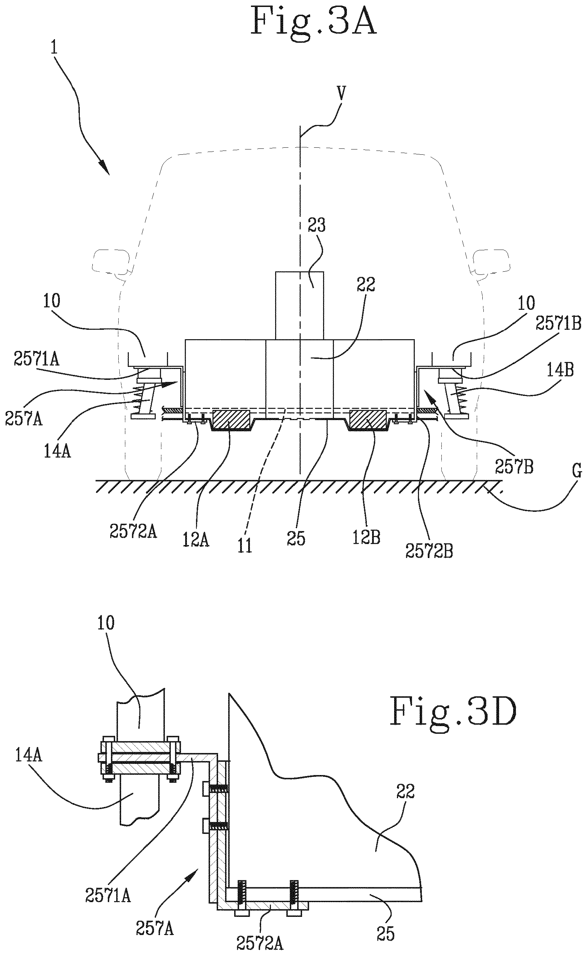

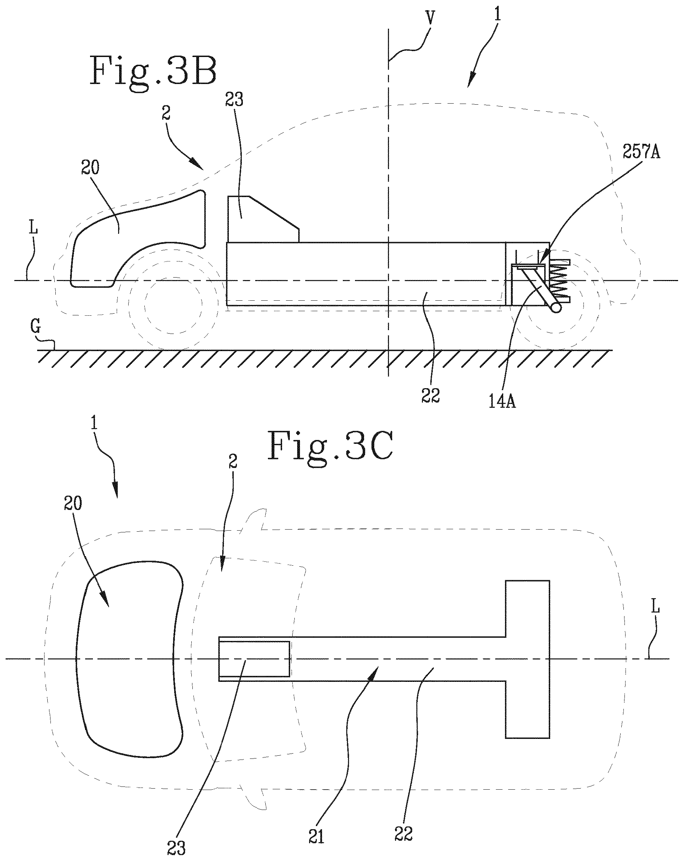

- Figures 3A, 3B and 3C schematically illustrate an electric vehicle according to this description, respectively in a transversal, longitudinal and top view;
- Figure 3D illustrates a detail of the coupling between the conversion kit and the vehicle;

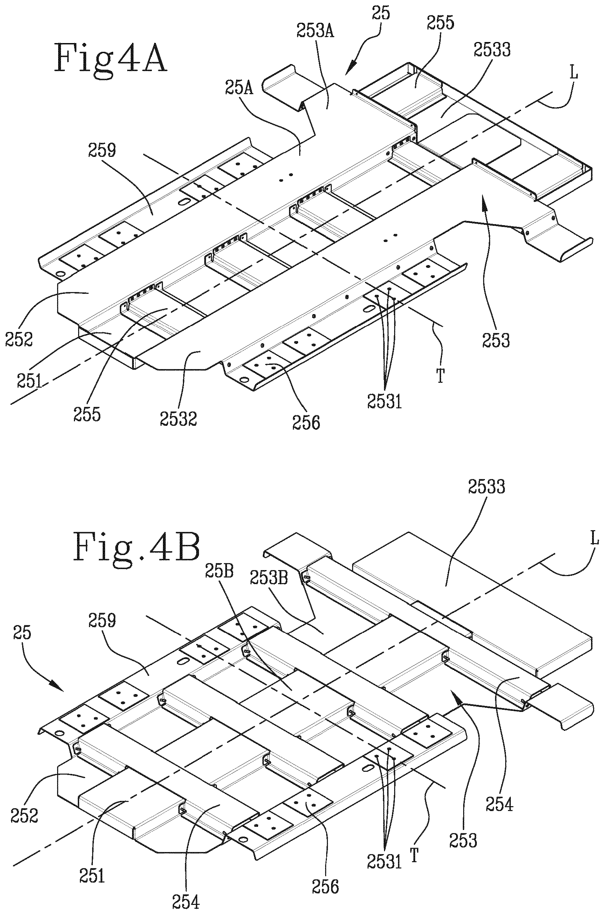

- Figure 4A illustrates a counterplatform of the conversion kit according to this description, in a top view;
- Figure 4B is a bottom view of the counterplatform of Figure 4A;

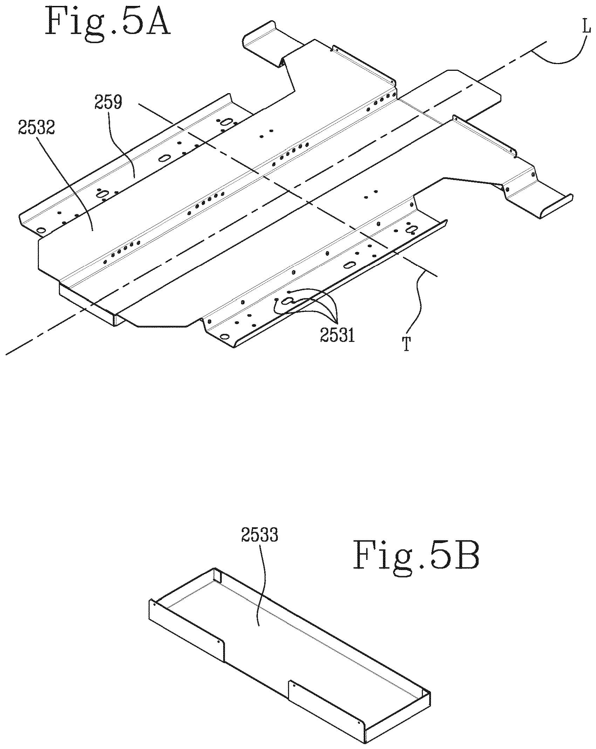

- Figures 5A and 5B respectively illustrate details of the counterplatform of Figure 4A;

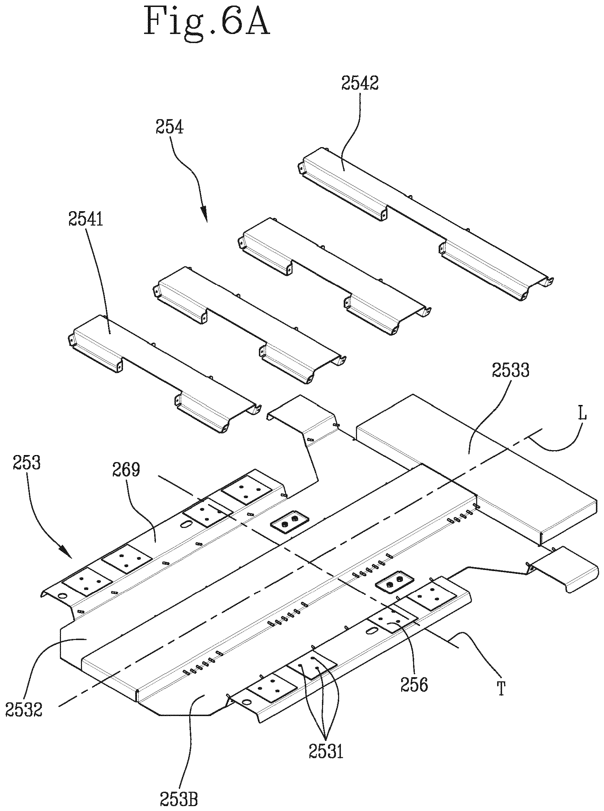

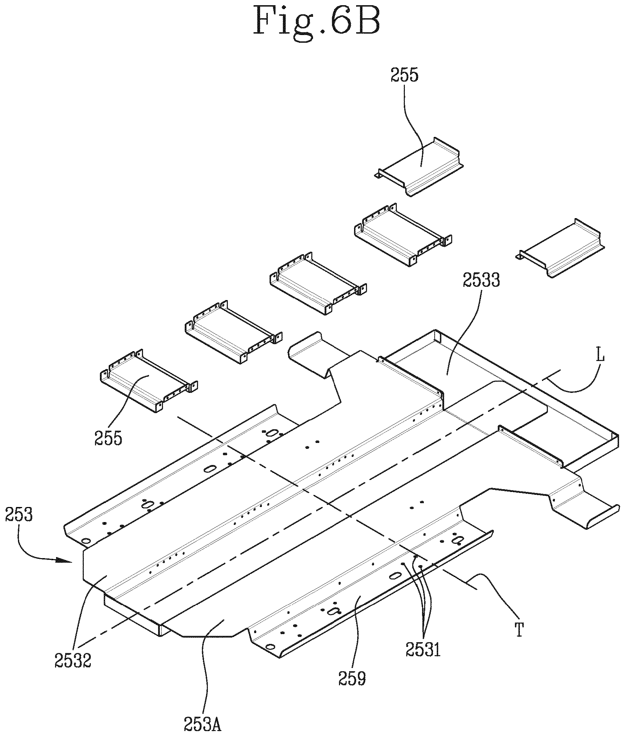

- Figures 6A and 6B respectively illustrate exploded views of the counterplatform of Figure 4A;

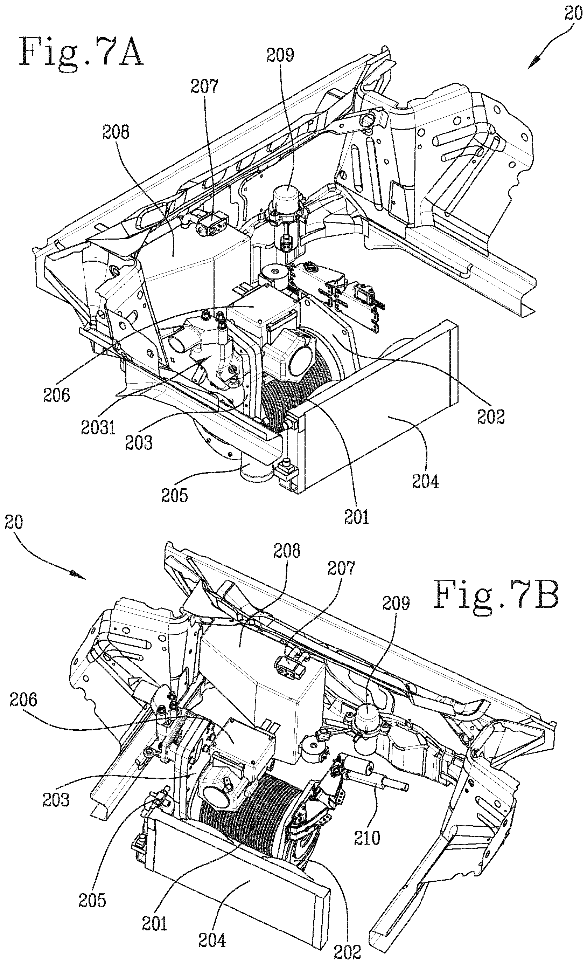

- Figures 7A and 7B illustrate a front assembly of the conversion kit according to this description;

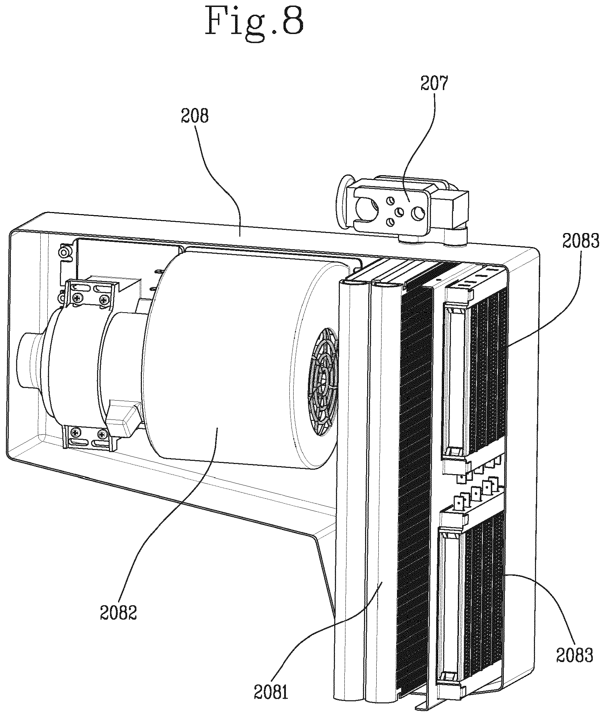

- Figure 8 illustrates a detail of the front assembly of Figures 7A and 7B.

With reference to the accompanying figures, the numeral 2 denotes a conversion kit for converting into an electric vehicle 1 a vehicle with an internal combustion engine.

The vehicle 1 comprises a chassis 10. The chassis 10 comprises a platform 11. The platform 11 has an underside face 11B facing the ground G. The platform 11 has a top face 11A, opposite to the underside face 11B.

In one embodiment, the chassis 10 comprises a first longitudinal member 12A. In one embodiment, the first longitudinal member 12A runs parallel to a longitudinal direction L, parallel to the direction of movement of the vehicle.

In one embodiment, the first longitudinal member 12A comprises a first longitudinal portion 121A and a second longitudinal portion 122A, running lengthwise along the longitudinal direction L, and a connecting stretch 123A, which connects the first portion 121A and the second portion 122A. In one embodiment, the first portion 121A of the first longitudinal member 12A is longer (along the longitudinal direction) than the second portion 122A of the first longitudinal member 12A.

In one embodiment, the chassis 10 comprises a second longitudinal member 12B. In one embodiment, the second longitudinal member 12B runs parallel to the longitudinal direction L.

In one embodiment, the second longitudinal member 12B comprises a first longitudinal portion 121B and a second longitudinal portion 122B, running lengthwise along the longitudinal direction L, and a connecting stretch 123B, which connects the first portion 121B and the second portion 122B. In one embodiment, the first portion 121B of the second longitudinal member 12B is longer (along the longitudinal direction) than the second portion 122B of the second longitudinal member 12B.

In one embodiment, the second portion 122A of the first longitudinal member 12A and the second portion 122B of the second longitudinal member 12B are positioned at the rear suspensions of the vehicle (at the point where the vehicle rear suspensions connect to the chassis).

It should be noticed that the distance between the second portion 122A of the first longitudinal member 12A and the second portion 122B of the second longitudinal member 12B is greater than the distance between the first portion 121A of the first longitudinal member 12A and the first portion 121B of the second longitudinal member 12B.

The platform 11 is supported by said first longitudinal member 12A and second longitudinal member 12B.

An opening 13 is made in the platform 11. In one embodiment, the opening 13 is made in a central portion of the platform 11, between said first longitudinal member 12A and second longitudinal member 12B. In one embodiment, the opening 13 runs lengthwise along the longitudinal direction L.

The vehicle 1 comprises a first rear suspension 14A. The vehicle comprises a second rear suspension 14B. In one embodiment, the chassis 10 comprises a first and a second suspension bearing. The first rear suspension 14A and second rear suspension 14B comprise respective suspension arms. The first rear suspension 14A and the second rear suspension 14B are connected to the chassis 10 at the first suspension bearing and at the second suspension bearing, respectively.

In one embodiment, the conversion kit 2 includes a front assembly 20 and a rear assembly 21.

The rear assembly 21 includes a casing 211 and a cover 212, fixed to the casing 211 to close it.

The conversion kit 2 includes an electric motor 201, disposed in the front assembly 20.

In one embodiment, the front assembly 20 comprises a first fixing bracket (or flange) 202, configured to fix the electric motor 201 to the pre-existing gearbox. In one embodiment, the front assembly 20 includes a second fixing bracket 203, configured to be fixed to the chassis 10 at a right-hand original engine support.

In one embodiment, the front assembly 20 comprises a conditioning system, including a condenser 204, a drier 205, a compressor 206, a throttling valve 207, an evaporation box 208. In one embodiment, the evaporation box 208 includes an evaporator 2081. In one embodiment, the evaporation box 208 includes a blower 2082. In one embodiment, the evaporation box 208 includes one or more electric heating elements 2083.

In one embodiment, the front assembly 20 comprises a pump 209 for the braking system.

In one embodiment, the front assembly 20 includes an electrically operated actuator 210 for changing gear.

The conversion kit 2 includes a battery pack 22. In one embodiment, the battery pack 22 is disposed in the rear assembly 21. In one embodiment, the conversion kit 2 includes an inverter 23. In one embodiment, the inverter 23 is disposed in the rear assembly 21. In one embodiment, the inverter 23 is connected to the rear assembly 21, on the outside of it. In one embodiment, the inverter 23 is fixed on the cover 212 of the casing 211. In one embodiment, the conversion kit 2 includes a battery charger 24. In one embodiment, the battery charger 24 is disposed in the rear assembly 21. In one embodiment, the battery charger 24 is connected to the rear assembly 21, on the outside of it.

In one embodiment, the conversion kit 2 includes a battery management system. In one embodiment, the battery management system is disposed in the rear assembly 21.

In one embodiment, the battery pack 22 is disposed in the opening 13 made in the platform 11. In one embodiment, the battery rear assembly is placed in the opening 13 made in the platform 11. In one embodiment, the battery pack 22 is positioned inside the rear assembly 21, disposed in the opening 13 made in the platform 11.

In one embodiment, the conversion kit 2 includes a counterplatform 25. In one embodiment, the counterplatform 25 is juxtaposed with the platform 11. In one embodiment, the counterplatform 25 is juxtaposed with the underside face 11B of the platform 11.

In one embodiment, the counterplatform 25 has an underside face 25B, facing the ground G. In one embodiment, the counterplatform 25 has a top face 25A, opposite to the underside face 25B. In one embodiment, the top face 25B of the counterplatform 25 is juxtaposed with the underside face 11B of the platform 11.

In one embodiment, the counterplatform 25 is integral with the rear assembly 21. In one embodiment, the rear assembly 21 rests on the top face 25A of the counterplatform 25. In one embodiment, the rear assembly 21 is fixed to the top face 25A of the counterplatform 25.

In one embodiment, the counterplatform 25 includes a supporting portion 251. In one embodiment, the counterplatform 25 includes a fixing portion 252. In one embodiment, the supporting portion 251 is a central portion of the counterplatform 25. In one embodiment, the fixing portion 252 extends in a periphery of the supporting portion 251.

In one embodiment, the rear assembly 21 rests on the top face 25A of the counterplatform, in an area defined by the supporting portion 251. In one embodiment, the rear assembly 21 is supported by the supporting portion 251 of the counterplatform 25. In one embodiment, the rear assembly 21 is fixed to the supporting portion 251 of the counterplatform 25.

In one embodiment, the supporting portion 251 of the counterplatform 25 covers the opening 13 in the platform 11.

In one embodiment, the fixing portion 252 of the counterplatform 25 is juxtaposed with the platform 11. In one embodiment, the fixing portion 252 of the counterplatform 25 is fixed to each said first longitudinal member 12A and second longitudinal member 12B. In one embodiment, the fixing portion 252 of the counterplatform is fixed to each said first longitudinal member 12A and second longitudinal member 12B by means of a system of screws and bushes.

In one embodiment, the counterplatform 25 includes a baseplate 253. In one embodiment, the baseplate 253 has a front portion 2532. The front portion 2532 runs lengthwise along the longitudinal direction L. In one embodiment, the baseplate 253 has a rear portion 2533. The rear portion 2533 is oriented transversally to the longitudinal direction L. The front portion 2532 and the rear portion 2533 are assembled together.

In one embodiment, the baseplate 253 has a top face 253A. The top face 253A of the baseplate 253 defines the top face 25A of the counterplatform 25. In one embodiment, the baseplate 253 has an underside face 253B, opposite to the top face 253B. The underside face 253B of the baseplate 253 defines the underside face 25B of the counterplatform 25. The underside face 253B of the baseplate 253 is oriented towards the ground G.

In one embodiment, the counterplatform 25 includes a plurality of crosspieces 254, which run crosswise along a transversal direction T (perpendicular to the longitudinal direction L and to the vertical direction V). In one embodiment, the crosspieces 254 comprise a plurality of front crosspieces 2541 and at least one rear crosspiece 2542, whose size along the transversal direction T is greater than that of the front crosspieces 2541. The crosspieces 254 of said plurality are fixed to the underside face 253B of the baseplate 253.

In one embodiment, the counterplatform 25 includes a plurality of spacers 255. The spacers 255 of said plurality are fixed to the top face 253A of the baseplate 253. In one embodiment, the spacers 255 are interposed between the top face 253A of the baseplate and the rear assembly 21.

In one embodiment, the baseplate 253 is shaped to closely follow the shape of the first longitudinal member 12A and the second longitudinal member 12B. In particular, the baseplate 253 is equipped with two brackets (or tracks) 259 for connecting to the longitudinal members 12A and 12B. Said brackets 259 closely follow the shape of the platform 11, which has two grooves at the longitudinal members 12A and 12B. Said brackets 259 have two grooves which closely follow the shape of the platform 11, at the longitudinal members 12A and 12B.

In one embodiment, the counterplatform 25 is anchored to the first longitudinal member 12A and to the second longitudinal member 12B by means of a system of screws and bushes connected to said brackets 259 of the baseplate 253. In one embodiment, defined in the brackets 259 of the baseplate 253 there is a plurality of slots 2531 for anchoring the system of screws and bushes which connects the baseplate 253 to the longitudinal members 12A and 12B. The plurality of slots 2531 is made at the longitudinal members 12A and 12B.

In one embodiment, the conversion kit 2 includes a plurality of plates 256. In one embodiment, said plurality of plates 256 is part of the connecting system between the platform 11 and the counterplatform 25.

In one embodiment, at least one part of said plurality of plates 256 is interposed between the first longitudinal member 12A and the top face 253A of the baseplate 253, to optimize the connection between them. In one embodiment, at least one part of said plurality of plates 256 is interposed between the second longitudinal member 12B and the top face 253A of the baseplate 253, to optimize the connection between them. In one embodiment, one part of said plurality of plates 256 is in contact with the underside face 253B of the baseplate.

In one embodiment, the conversion kit 2 comprises a plurality of counterplates, positioned above the platform (at the plates).

In one embodiment, the counterplatform 11 includes a pair of rear brackets (a first and a second rear bracket 257A and 257B). Each rear bracket 257A, 257B includes a respective first portion 2571A, 2571B and a respective second portion 2572A, 2572B. In one embodiment, the first portion 2571A 2571B of each rear bracket 257A, 257B is 'L'-shaped, that is to say, it is composed of two orthogonal parts which are integral with each other, one of which is interposed between the chassis 10 and the first suspension bearing 14A, the other (oriented along the vertical direction) is fixed to the respective second portion 2572A, 2572B by means of screws (in one embodiment, by means of screws with horizontal axis). In one embodiment, the second portion 2572A, 2572B is 'L'-shaped, that is to say, it is composed of two orthogonal parts which are integral with each other, one of which (oriented along the vertical direction) is fixed to the respective first portion 2571A, 2571B (by means of screws), the other is integral with the counterplatform 25.

Therefore, the rear brackets 257A, 257B are integral with the counterplatform 25 and with the chassis 10. In one embodiment, the second portion 2572A, 2572B of each of said first and second rear brackets 257A, 257B is fixed to the rear portion 2533 of the baseplate 253, to support the casing 211 (the rear assembly 21).

The first portion 2571A, 2571B of each of said first and second rear brackets 257A, 257B is interposed between the chassis 10 and the respective suspension 14A, 14B, and fastened by means of screws. Therefore, the first rear bracket 257A and the second rear bracket 257B are respectively interposed between the first suspension 14A and the chassis 10, and between the second suspension 14B and the chassis 10, and fastened by means of screws.

This description also provides a method for converting into an electric vehicle 1 a vehicle with an internal combustion engine. The vehicle with an internal combustion engine (and therefore the electric vehicle 1 obtained from it) is equipped with a chassis 10, including a platform 11.

The method comprises a step of preparing a conversion kit 2. The conversion kit 2 comprises an electric motor 201. The conversion kit 2 comprises a battery pack 22. In one embodiment, the conversion kit 2 comprises an inverter 23. In one embodiment, the conversion kit 2 comprises a battery charger 24. In one embodiment, the conversion kit 2 comprises a battery management system.

In one embodiment, the conversion kit 2 includes a counterplatform 25.

The method comprises a step of making an opening 13 in the platform 11, by cutting and removing material from the platform 11.

The method comprises a step of coupling the conversion kit 11 to the vehicle with internal combustion engine, thereby converting it into the electric vehicle 1. During the coupling step, the battery pack 22 is placed in the opening 13, made in the platform 11.

In one embodiment, during the coupling step, the counterplatform 25 is fixed to the chassis 10 of the vehicle to support the battery pack 22.

The chassis 10 of the vehicle with internal combustion engine (and therefore of the vehicle 1 obtained from it) includes a first longitudinal member 12A and a second longitudinal member 12B. The first longitudinal member 12A and the second longitudinal member 12B run parallel to a longitudinal direction L, parallel to the direction of movement of the vehicle.

In one embodiment, the platform 11 is supported by the first and second longitudinal members 12A and 12B.

In one embodiment, the opening 13 is made by cutting the platform 11 in a portion between the first longitudinal member 12A and the second longitudinal member 12B. In one embodiment, the opening 13 runs parallel to the longitudinal direction L.

In one embodiment, the counterplatform 25 includes a central portion, said supporting portion 251, integral with a rear assembly 21 containing the battery pack 22. The rear assembly 21 may in turn include a casing 211 and a cover 212.

In one embodiment, the battery charger 24 is fixed on the cover 212 of the casing 211.

In one embodiment, the counterplatform 25 includes a fixing portion 252, which extends at the sides of the supporting portion 251. In one embodiment, during the coupling step, the fixing portion 252 is juxtaposed with the platform 11 in at least one peripheral portion of the opening 13.

In one embodiment, during the coupling step, the fixing portion 252 of the counterplatform 25 is fixed to the first longitudinal member 12A and to the second longitudinal member 12B of the chassis 10 of the vehicle 1.

In one embodiment, the coupling step comprises lifting the vehicle 1 to be converted along a vertical direction V (parallel to the weight force). In one embodiment, the coupling step comprises moving the rear assembly 21 and the counterplatform 25 integral with it along the vertical direction V, to insert the rear assembly 21 into the opening 13 and to juxtapose the counterplatform 25 with the platform 11.

In one embodiment, the vehicle 1 comprises a first rear suspension 14A and a second rear suspension 14B. The first rear suspension 14A and the second rear suspension 14B are connected to the chassis 10 at a first and at a second suspension bearing, respectively. In one embodiment, fixing the counterplatform 25 to the chassis 10 comprises anchoring the counterplatform 25 to the first and second suspension bearings.

In one embodiment, the conversion kit comprises a first rear bracket 257A and a second rear bracket 257B. Each said first and second rear bracket 257A and 257B comprises a respective first portion 2571A, 2571B and a respective second portion 2572A, 2572B. Prior to the step of fixing the counterplatform 25 to the chassis 10, the first portion 2571A of the first rear bracket 257A is interposed between the chassis 10 and the first suspension bearing 14A (above the first suspension arm), and fixed to them; similarly, prior to the step of fixing the counterplatform 25 to the chassis 10, the first portion 2571B of the second rear bracket 257B is interposed between the chassis 10 and the second suspension bearing 14B (above the second suspension arm), and fixed to them. In other words, the first portion 2571A of the first rear bracket 257A and the first portion 2571B of the second rear bracket 257B are interposed and fixed between the chassis 10 and the first and second suspension bearings 14A and 14B, respectively. Furthermore, the second portion 2572A of the first rear bracket 257A and the second portion 2572B of the second rear bracket 257B are fixed to the rear assembly 21 (after the rear assembly has been inserted into the opening 13). Preferably, the second portion 2572A of the first rear bracket 257A and the second portion 2572B of the second rear bracket 257B are fixed to the counterplatform 25. Therefore, in one embodiment, fixing the counterplatform 25 to the chassis 10 comprises fixing the first portion 2571A of the first rear bracket 257A to the second portion 2572A of the first rear bracket 257A, and fixing the first portion 2571B of the second rear bracket 257B to the second portion 2572B of the second rear bracket 257B.

In one embodiment, the conversion kit 2 comprises not just the rear assembly 21, but also a front assembly 20, in which the electric motor 201 is disposed. In one embodiment, the conversion kit 2 comprises a conditioning system, disposed in the front assembly 20.

In one embodiment, the coupling step comprises removing the internal combustion engine from an engine compartment in which it was originally disposed, and then placing the front assembly 20 in the engine compartment.

In one embodiment, the chassis 10 comprises a suspension element 2031, to which the internal combustion engine is anchored in the original vehicle. In one embodiment, the suspension element 2031 of the original internal combustion engine is preserved during conversion of the vehicle. In one embodiment, the front assembly 20 (electric motor 201 and conditioning system) is anchored to the suspension element 2031 of the original internal combustion engine.

In one embodiment, the front assembly 20 comprises a first fixing bracket 202. In one embodiment, during the coupling step, the first fixing bracket 202 is fixed to the pre-existing gearbox.

In one embodiment, the front assembly 20 includes a second fixing bracket 203. In one embodiment, during the coupling step, the second fixing bracket 203 is fixed to the chassis 10 at a right-hand original engine support, preserving the original suspension element 2031 of the internal combustion engine.

In one embodiment, the front assembly 20 comprises a conditioning system, including a condenser 204, a drier 205, a compressor 206, a throttling valve 207, an evaporation box 208. In one embodiment, the evaporation box 208 includes an evaporator 2081. In one embodiment, the evaporation box 208 includes a blower 2082. In one embodiment, the evaporation box 208 includes one or more electric heating elements 2083. In one embodiment, the front assembly 20 comprises a pump 209 for the braking system.

In one embodiment, the front assembly 20 includes an electrically operated actuator 210 for changing gear.

The following paragraphs, listed with alphanumeric references, are example, non-limiting ways of describing the electric vehicle according to this invention.

A. An electric vehicle converted from an original internal combustion vehicle, equipped with a chassis comprising a platform;
comprising a conversion kit, including an electric motor, a battery pack, an inverter, and a battery management system, where the battery pack is disposed in an opening made in the platform of the vehicle.
A1. The electric vehicle according to paragraph A, wherein the conversion kit also includes a counterplatform which is integral with a rear assembly containing the battery pack and fixed to the chassis of the vehicle.
A1.1. The electric vehicle according to paragraph A1, wherein the chassis includes a first and a second longitudinal member running parallel to a longitudinal direction parallel to a direction of movement of the vehicle, the platform being supported by said first and second longitudinal members, and wherein the opening is made in a central portion of the platform between the first and second longitudinal members and runs lengthwise along the longitudinal direction, and wherein the counterplatform is fixed to the first and second longitudinal members.
A1.2. The electric vehicle (1) according to paragraph A1 or paragraph A1.1, comprising a first rear suspension and a second rear suspension, both connected to the chassis at a first and second suspension bearing, respectively, wherein the conversion kit comprises a first and a second rear bracket, each comprising a first portion which is interposed and fixed between the chassis and the first and second suspension bearing, respectively, and a second portion which is connected to the respective first portion and to the counterplatform.
A2. The electric vehicle according to any one of paragraphs A to A1.2, wherein the conversion kit comprises an air conditioning system which includes an evaporator, and a front assembly which contains the electric motor and the air conditioning system.

## Claims

1. A method for converting into an electric vehicle (1) a vehicle with an internal combustion engine equipped with a chassis (10) including a platform (11), the method being **characterized in that** it comprises the following steps:
- preparing a conversion kit (2), including an electric motor (201), a battery pack (22), an inverter (23) and a battery management system;
- making an opening (13) in the platform (11) by cutting and removing material from the platform (11);
- coupling the conversion kit (2) to the vehicle (1), where the battery pack (22) is placed in the opening (13) made in the platform (11).

2. The method according to claim 1, wherein the conversion kit (2) also includes a counterplatform (25) and wherein the step of coupling the conversion kit (2) to the vehicle (1) comprises fixing the counterplatform (25) to the chassis (10) to support the battery pack (22).

3. The method according to claim 2, wherein the chassis (10) includes a first and a second longitudinal member (12A) and (12B) running parallel to a longitudinal direction (L) parallel to a direction of movement of the vehicle, the platform (11) being supported by the first and second longitudinal members (12A) and (12B), and wherein the opening (13) is made in a central portion of the platform (11) between the first and second longitudinal members (12A) and (12B) and runs lengthwise along the longitudinal direction (L).

4. The method according to claim 3, wherein the conversion kit (2) comprises a rear assembly (21), containing the battery pack (22), and wherein the counterplatform (25) includes a supporting portion (251) which is integral with the rear assembly (21) and a fixing portion (252) which is juxtaposed with the platform (11) in at least one peripheral portion of the opening (13).

5. The method according to claim 4, wherein the step of coupling comprises lifting the vehicle along a vertical direction (V) and moving the rear assembly (21) and the counterplatform (25) along the vertical direction (V) to insert the rear assembly (21) into the opening (13) from below.

6. The method according to one or more of claims 3 to 5, wherein fixing the counterplatform (25) to the chassis (10) comprises anchoring the counterplatform (25) to the first longitudinal member (12A) and to the second longitudinal member (12B) of the chassis (10).

7. The method according to any one of claims 2 to 6, wherein the vehicle (1) comprises a first rear suspension (14A) and a second rear suspension (14B), both connected to the chassis (10) of the vehicle (1) at a first and at a second suspension bearing, respectively, wherein the conversion kit (2) comprises a first and a second rear bracket (257A, 257B), each including a first portion (2571A, 2571B) and a second portion (2572A, 2572B), wherein the second portions (2572A, 2572B) of the first and second rear brackets (257A, 257B) are each fixed to the counterplatform (25), the method comprising, prior to the step of fixing the counterplatform (25) to the chassis (10), a step of interposing and anchoring the first portion (2571A) of the first rear bracket (257A) and the first portion (2571B) of the second rear bracket (257B) between the chassis (10) and the first and second suspension bearing, respectively, and wherein the step of fixing the counterplatform (25) to the chassis (10) comprises, for both the first rear bracket (257A) and the second rear bracket (257B), a step of fixing the first portion (2571A, 2571B) to the second portion (2572A, 2572B).

8. The method according to any one of the preceding claims, wherein the conversion kit (2) comprises a front assembly (20), which contains the electric motor (201) and a self-contained air conditioning system, wherein the front assembly (20) is placed in an engine compartment from which the internal combustion engine has been removed.

9. A conversion kit (2) for converting into an electric vehicle (1) a vehicle with an internal combustion engine equipped with a chassis (10) including a platform (11);
- an electric motor, a battery pack (22), an inverter (23) and a battery management system;
- a counterplatform (25) configured to be juxtaposed with, and fixed to, the chassis (10) of the vehicle (1) to support the battery pack (22),
**characterized in that** the counterplatform (25) includes a baseplate (253) having an underside face (253B) and a top face (253A) opposite to the underside face (253B), the top face (253A) being configured to be juxtaposed with the platform (11) of the vehicle (1).

10. The conversion kit (2) according to claim 9, comprising a self-contained air conditioning system and a front assembly (20) containing the electric motor (201) and the air conditioning system.

11. The conversion kit (2) according to claim 9 or 10, wherein the counterplatform (25) further includes a plurality of crosspieces (254) fixed to the underside face (253B) of the baseplate (253) and a plurality of spacers (255) fixed to the top face (253A) of the baseplate (253) and interposed between the baseplate (253) and the battery pack (22).

12. The conversion kit (2) according to any one of claims 9 to 11, wherein the counterplatform (25) includes a plurality of low carbon steel sheets.

13. An electric vehicle (1) converted from an original internal combustion vehicle, equipped with a chassis (10) comprising a platform (11);
**characterized in that** it comprises a conversion kit (2) according to any one of claims 9 to 12, wherein the battery pack (22) of the conversion kit (2) is disposed in an opening (13) made in the platform (11) of the vehicle (1).

14. The electric vehicle (1) according to claim 13, wherein the chassis (10) includes a first and a second longitudinal member (12A) and (12B) running parallel to a longitudinal direction (L) parallel to a direction of movement of the vehicle, the platform (11) being supported by the first and second longitudinal members (12A) and (12B), and wherein the opening (13) is made in a central portion of the platform (11) between the first and second longitudinal members (12A) and (12B) and runs lengthwise along the longitudinal direction (L), and wherein the counterplatform (25) is fixed to the first and second longitudinal members (12A) and (12B).

15. The electric vehicle (1) according to claim 13 or 14, comprising a first rear suspension (14A) and a second rear suspension (14B), both connected to the chassis (10) at a first and second suspension bearing, respectively, wherein the conversion kit (2) comprises a first and a second rear bracket (257A) and (257B), each comprising a first portion (2571A, 2571B) which is interposed and fixed between the chassis (10) and the first and second suspension bearing, respectively, and a second portion (2572A, 2572B) which is connected to the respective first portion (2571A, 2571B) and to the counterplatform (25).

## Patentansprüche

1. Verfahren zum Umbauen eines Fahrzeugs mit einem Verbrennungsmotor, der mit einem Fahrgestell (10) enthaltend eine Plattform (11) ausgestattet ist, in ein elektrisches Fahrzeug (1), wobei das Verfahren **dadurch gekennzeichnet ist, dass** es die folgenden Schritte umfasst:
- Vorbereiten eines Umbausatzes (2) enthaltend einen Elektromotor (201), einen Akku (22), einen Wechselrichter (23) und ein Batteriemanagementsystem;
- Herstellen einer Öffnung (13) in der Plattform (11) durch Schneiden und Entfernen von Material von der Plattform (11);
- Koppeln des Umbausatzes (2) an das Fahrzeug (1), wo der Akku (22) in die Öffnung (13) der Plattform (11) eingesetzt ist.

2. Verfahren nach Anspruch 1, wobei der Umbausatz (2) auch eine Gegenplattform (25) enthält und wobei der Schritt zum Koppeln des Umbausatzes (2) mit dem Fahrzeug (1) das Befestigen der Gegenplattform (25) an dem Fahrgestell (10) zum Tragen des Akkus (22) umfasst.

3. Verfahren nach Anspruch 2, wobei das Fahrgestell (10) ein erstes und ein zweites Längselement (12A) und (12B) umfasst, die parallel zu einer Längsrichtung (L) parallel zu einer Bewegungsrichtung des Fahrzeugs verlaufen, wobei die Plattform (11) durch das erste und zweite Längselement (12A) und (12B) getragen wird und wobei die Öffnung (13) in einem zentralen Abschnitt der Plattform (11) zwischen dem ersten und dem zweiten Längselement (12A) und (12B) ausgebildet ist und längs in Längsrichtung (L) verläuft.

4. Verfahren nach Anspruch 3, wobei der Umbausatz (2) eine hintere Anordnung (21) umfasst, die den Akku (22) beinhaltet, und wobei die Gegenplattform (25) einen Stützabschnitt (251), der mit der hinteren Anordnung (21) einstückig ist und einen Befestigungsabschnitt (252), der neben der Plattform (11) in mindestens einem Umfangsabschnitt der Öffnung (13) angeordnet ist, enthält.

5. Verfahren nach Anspruch 4, wobei der Kopplungsschritt das Anheben des Fahrzeugs entlang einer vertikalen Richtung (V) und das Bewegen der hinteren Anordnung (21) und der Gegenplattform (25) entlang der vertikalen Richtung (V) umfasst, um die hintere Anordnung (21) von unten in die Öffnung (13) einzuführen.

6. Verfahren nach einem oder mehreren der Ansprüche 3 bis 5, wobei das Befestigen der Gegenplattform (25) am Fahrgestell (10) das Verankern der Gegenplattform (25) an dem ersten Längselement (12A) und an dem zweiten Längselement (12B) des Fahrgestells (10) umfasst.

7. Verfahren nach einem der Ansprüche 2 bis 6, wobei das Fahrzeug (1) eine erste Hinterradaufhängung (14A) und eine zweite Hinterradaufhängung (14B) umfasst, die beide mit dem Fahrgestell (10) des Fahrzeugs (1) jeweils an einem ersten und an einem zweiten Aufhängungslager verbunden sind, wobei der Umbausatz (2) eine erste und eine zweite hintere Halterung (257A, 257B) umfasst, von denen eine jede einen ersten Abschnitt (2571A, 2571B) und einen zweiten Abschnitt (2572A, 2572B) enthält, wobei die zweiten Abschnitte (2572A, 2572B) der ersten und zweiten hinteren Halterung (257A, 257B) jeweils an der Gegenplattform (25) befestigt sind, wobei das Verfahren vor dem Schritt zum Befestigen der Gegenplattform (25) am Fahrgestell (10), einen Schritt zum Zwischenschalten und Verankern des ersten Abschnitts (2571A) der ersten hinteren Halterung (257A) und des ersten Abschnitts (2571B) der zweiten hinteren Halterung (257B) jeweils zwischen dem Fahrgestell (10) und dem ersten und zweiten Aufhängungslager umfasst, und wobei der Schritt zum Befestigen der Gegenplattform (25) am Fahrgestell (10) sowohl für die erste hintere Halterung (257A) als auch für die zweite hintere Halterung (257B) einen Schritt zum Befestigen des ersten Abschnitts (2571A, 2571B) an dem zweiten Abschnitt (2572A, 2572B) umfasst.

8. Verfahren nach einem der vorhergehenden Ansprüche, wobei der Umbausatz (2) eine vordere Anordnung (20) umfasst, die den Elektromotor (201) und eine eigenständige Klimaanlage enthält, wobei die vordere Anordnung (20) in einem Motorraum, aus dem der Verbrennungsmotor entfernt wurde, angeordnet ist.

9. Umbausatz (2) zum Umbauen eines Fahrzeugs mit einem Verbrennungsmotor, der mit einem Fahrgestell (10) enthaltend eine Plattform (11) ausgestattet ist, in ein elektrisches Fahrzeug (1);
- einen Elektromotor, einen Akku (22), einen Wechselrichter (23) und ein Batteriemanagementsystem;
- eine Gegenplattform (25), die konfiguriert ist, um neben dem Fahrgestell (10) des Fahrzeugs (1) angeordnet und an diesem befestigt zu werden, um den Akku (22) zu tragen,
**dadurch gekennzeichnet, dass** die Gegenplattform (25) eine Grundplatte (253) mit einer Unterseite (253B) und einer Oberseite (253A) gegenüber der Unterseite (253B) enthält, wobei die Oberseite (253A) so konfiguriert ist, dass sie neben der Plattform (11) des Fahrzeugs (1) angeordnet wird.

10. Umbausatz (2) nach Anspruch 9, umfassend eine eigenständige Klimaanlage und eine vordere Anordnung (20), die den Elektromotor (201) und die Klimaanlage enthält.

11. Umbausatz (2) nach Anspruch 9 oder 10, wobei die Gegenplattform (25) ferner eine Vielzahl an Kreuzstücken (254), die an der Unterseite (253B) der Grundplatte (253) befestigt sind, und eine Vielzahl an Abstandshaltern (255), die an der Oberseite (253A) der Grundplatte (253) befestigt sind und zwischen der Grundplatte (253) und dem Akku (22) angeordnet sind, enthält.

12. Umbausatz (2) nach einem der Ansprüche 9 bis 11, wobei die Gegenplattform (25) eine Vielzahl an Stahlblechen mit niedrigem Kohlenstoffgehalt enthält.

13. Elektrisches Fahrzeug (1), das von einem ursprünglichen Verbrennungsfahrzeug umgebaut wurde und mit einem Fahrgestell (10) ausgestattet ist, das eine Plattform (11) umfasst;
**dadurch gekennzeichnet, dass** es einen Umbausatz (2) nach einem der Ansprüche 9 bis 12 umfasst, wobei der Akku (22) des Umbausatzes (2) in einer Öffnung (13) angeordnet ist, die in der Plattform (11) des Fahrzeugs (1) ausgebildet ist.

14. Elektrisches Fahrzeug (1) nach Anspruch 13, wobei das Fahrgestell (10) ein erstes und ein zweites Längselement (12A) und (12B) umfasst, die parallel zu einer Längsrichtung (L) parallel zu einer Bewegungsrichtung des Fahrzeugs verlaufen, wobei die Plattform (11) durch das erste und zweite Längselement (12A) und (12B) getragen wird und wobei die Öffnung (13) in einem zentralen Abschnitt der Plattform (11) zwischen dem ersten und dem zweiten Längselement (12A) und (12B) ausgebildet ist und längs in Längsrichtung (L) verläuft, und wobei die Gegenplattform (25) an dem ersten und zweiten Längselement (12A) und (12B) befestigt ist.

15. Elektrisches Fahrzeug (1) nach Anspruch 13 oder 14, umfassend eine erste Hinterradaufhängung (14A) und eine zweite Hinterradaufhängung (14B), die beide mit dem Fahrgestell (10) jeweils an einem ersten und zweiten Aufhängungslager verbunden sind, wobei der Umbausatz (2) eine erste und eine zweite hintere Halterung (257A) und (257B) umfasst, die jeweils einen ersten Abschnitt (2571A, 2571B), der jeweils zwischen dem Fahrgestell (10) und dem ersten und zweiten Aufhängungslager angeordnet und befestigt ist und einen zweiten Abschnitt (2572A, 2572B), der mit dem jeweiligen ersten Abschnitt (2571A, 2571B) und mit der Gegenplattform (25) verbunden ist, umfasst.

## Revendications

1. Procédé de conversion en un véhicule électrique (1) un véhicule à moteur à combustion interne équipé d'un châssis (10) comportant une plateforme (11), le procédé étant **caractérisé en ce qu'**il comprend les étapes suivantes:
- préparer un kit de conversion (2) incluant un moteur électrique (201), un bloc-batterie (22), un onduleur (23) et un système de gestion des batteries;
- réaliser une ouverture (13) dans la plateforme (11) en coupant et en enlevant du matériau de la plateforme (11) ;
- accoupler le kit de conversion (2) au véhicule (1), où le bloc-batterie (22) est placé dans l'ouverture (13) réalisée dans la plateforme (11).

2. Procédé selon la revendication 1, dans lequel le kit de conversion (2) inclut également une contre-plateforme (25) et dans lequel l'étape consistant à accoupler le kit de conversion (2) au véhicule (1) comprend la fixation de la contre-plateforme (25) au châssis (10) pour supporter le bloc-batterie (22).

3. Procédé selon la revendication 2, dans lequel le châssis (10) inclut un premier et un second longeron longitudinal (12A) et (12B) se prolongeant parallèlement à une direction longitudinale (L) parallèle à une direction de déplacement du véhicule, la plateforme (11) étant supportée par les premier et second longerons longitudinaux (12A) et (12B), et dans lequel l'ouverture (13) est réalisée dans une partie centrale de la plateforme (11) entre les premier et second longerons longitudinaux (12A) et (12B) et se prolonge dans le sens de la longueur le long de la direction longitudinale (L) .

4. Procédé selon la revendication 3, dans lequel le kit de conversion (2) comprend un ensemble arrière (21) contenant le bloc-batterie (22), et dans lequel la contre-plateforme (25) inclut une partie de support (251) étant solidaire de l'ensemble arrière (21) et une partie de fixation (252) étant juxtaposée à la plateforme (11) dans au moins une partie périphérique de l'ouverture (13) .

5. Procédé selon la revendication 4, dans lequel l'étape d'accouplement comprend le levage du véhicule dans une direction verticale (V) et le déplacement de l'ensemble arrière (21) et de la contre-plateforme (25) le long de la direction verticale (V) pour introduire l'ensemble arrière (21) dans l'ouverture (13) par le bas.

6. Procédé selon une ou plusieurs des revendications 3 à 5, dans lequel la fixation de la contre-plateforme (25) au châssis (10) comprend l'ancrage de la contre-plateforme (25) au premier longeron longitudinal (12A) et au second longeron longitudinal (12B) du châssis (10).

7. Procédé selon l'une quelconque des revendications 2 à 6, dans lequel le véhicule (1) comprend une première suspension arrière (14A) et une seconde suspension arrière (14B), toutes deux reliées au châssis (10) du véhicule (1), respectivement, en correspondance d'un premier et en correspondance d'un second palier de suspension, dans lequel le kit de conversion (2) comprend un premier et un second support arrière (257A, 257B), chacun comprenant une première partie (2571A, 2571B) et une seconde partie (2572A, 2572B), dans lequel les secondes parties (2572A, 2572B) des premier et second supports arrière (257A, 257B) sont chacune fixées à la contre-plateforme (25), le procédé comprenant, avant l'étape de fixation de la contre-plateforme (25) au châssis (10), une étape consistant à interposer et à ancrer la première partie (2571A) du premier support arrière (257A) et de la première partie (2571B) du second support arrière (257B) entre le châssis (10) et les premier et second paliers de suspension, respectivement, et dans lequel l'étape de fixation de la contre-plateforme (25) au châssis (10) comprend, pour le premier support arrière (257A) et le second support arrière (257B), une étape consistant à fixer la première partie (2571A, 2571B) à la seconde partie (2572A, 2572B).

8. Procédé selon l'une quelconque des revendications précédentes, dans lequel le kit de conversion (2) comprend un ensemble avant (20) contenant le moteur électrique (201) et un conditionneur d'air monobloc, dans lequel l'ensemble avant (20) est placé dans un compartiment moteur duquel le moteur à combustion interne a été retiré.

9. Kit de conversion (2) pour convertir en véhicule électrique (1) un véhicule à moteur à combustion interne équipé d'un châssis (10) incluant une plateforme (11) ;
- un moteur électrique, un bloc-batterie (22), un onduleur (23) et un système de gestion des batteries ;
- une contre-plateforme (25) configurée pour être juxtaposée et fixée au châssis (10) du véhicule (1) pour supporter le bloc-batterie (22),
**caractérisé en ce que** la contre-plateforme (25) inclut une plaque de base (253) comportant une face inférieure (253B) et une face supérieure (253A) opposée à la face inférieure (253B), la face supérieure (253A) étant configurée pour être juxtaposée à la plateforme (11) du véhicule (1).

10. Kit de conversion (2) selon la revendication 9, comprenant un conditionneur d'air monobloc et un ensemble avant (20) contenant le moteur électrique (201) et le système de climatisation.

11. Kit de conversion (2) selon la revendication 9 ou 10, dans lequel la contre-plateforme (25) inclut de plus une pluralité de traverses (254) fixées à la face inférieure (253B) de la plaque de base (253) et une pluralité d'entretoises (255) fixées à la face supérieure (253A) de la plaque de base (253) et interposées entre la plaque de base (253) et le bloc-batterie (22).

12. Kit de conversion (2) selon l'une quelconque des revendications 9 à 11, dans lequel la contre-plateforme (25) inclut une pluralité de tôles d'acier à faible teneur en carbone.

13. Véhicule électrique (1) converti à partir d'un véhicule à combustion interne d'origine, équipé d'un châssis (10) comprenant une plateforme (11);
**caractérisé en ce qu'**il comprend un kit de conversion (2) selon l'une quelconque des revendications 9 à 12, dans lequel le bloc-batterie (22) du kit de conversion (2) est disposé dans une ouverture (13) réalisée dans la plateforme (11) du véhicule (1).

14. Véhicule électrique (1) selon la revendication 13, dans lequel le châssis (10) inclut un premier et un second longeron longitudinal (12A) et (12B) se prolongeant parallèlement à une direction longitudinale (L) parallèle à une direction de déplacement du véhicule, la plateforme (11) étant supportée par les premier et second longerons longitudinaux (12A) et (12B), et dans lequel l'ouverture (13) est réalisée dans une partie centrale de la plateforme (11) entre les premier et second longerons longitudinaux (12A) et (12B) et se prolonge dans le sens de la longueur le long de la direction longitudinale (L), et dans lequel la contre-plateforme (25) est fixée aux premier et seconds longerons longitudinaux (12A) et (12B).

15. Véhicule électrique (1) selon la revendication 13 ou 14, comprenant une première suspension arrière (14A) et une seconde suspension arrière (14B), toutes deux reliées au châssis (10) en correspondance d'un premier et d'un second palier de suspension, respectivement, dans lequel le kit de conversion (2) comprend un premier et un second support arrière (257A) et (257B), comprenant chacun une première partie (2571A, 2571B) étant interposée et fixée entre le châssis (10) et les premier et second paliers de suspension, respectivement, et une seconde partie (2572A, 2572B) étant reliée à la première partie (2571A, 2571B) respective et à la contre-plateforme (25) .
